(19) Europäisches Patentamt / European Patent Office / Office européen des brevets

(11) **EP 2 828 124 B1**

(12) **EUROPÄISCHE PATENTSCHRIFT**

(45) Veröffentlichungstag und Bekanntmachung des Hinweises auf die Patenterteilung:
**24.02.2021 Patentblatt 2021/08**

(21) Anmeldenummer: **13709127.8**

(22) Anmeldetag: **14.03.2013**

(51) Int Cl.:
*F21V 8/00* (2006.01)  *F21S 41/13* (2018.01)
*F21S 41/16* (2018.01)  *F21S 41/125* (2018.01)

(86) Internationale Anmeldenummer:
**PCT/EP2013/055232**

(87) Internationale Veröffentlichungsnummer:
**WO 2013/139675 (26.09.2013 Gazette 2013/39)**

(54) **BELEUCHTUNGSEINRICHTUNG ZUR ERZEUGUNG VON LICHT MIT HOHER LEUCHTDICHTE**

LIGHTING EQUIPMENT FOR GENERATING LIGHT WITH HIGH LUMINOUS DENSITY

DISPOSITIF D'ÉCLAIRAGE POUR PRODUIRE DE LA LUMIÈRE D'UNE LUMINANCE ÉLEVÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.03.2012 DE 102012005660**
**22.03.2012 US 201261614101 P**
**26.06.2012 EP 12173604**

(43) Veröffentlichungstag der Anmeldung:
**28.01.2015 Patentblatt 2015/05**

(73) Patentinhaber: **Schott AG**
**55122 Mainz (DE)**

(72) Erfinder:
• **WÖLFING, Bernd**
**55122 Mainz (DE)**

• **HAGEMANN, Volker**
**55270 Klein-Winternheim (DE)**
• **MEINL, Jürgen**
**65329 Hohenstein-Holzhausen (DE)**

(74) Vertreter: **Blumbach · Zinngrebe Patentanwälte PartG mbB**
**Alexandrastraße 5**
**65187 Wiesbaden (DE)**

(56) Entgegenhaltungen:
**EP-A2- 2 551 154**  **DE-A1-102008 012 316**
**DE-A1-102010 028 949**  **US-A1- 2011 157 865**
**US-A1- 2011 222 149**  **US-A1- 2011 255 264**
**US-A1- 2012 106 178**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine Beleuchtungseinrichtung zur Erzeugung von Licht mit hoher Leuchtdichte, insbesondere Weißlicht, umfassend zumindest eine Strahlungsquelle, ein Konversionsmedium sowie eine Trägervorrichtung zur Positionierung und Fixierung der Strahlungsquelle in Relation zu dem Konversionsmedium. Dabei ist das Konversionsmedium im Strahlengang der Strahlungsquelle angeordnet und konvertiert das eingestrahlte Licht zumindest anteilig in einen anderen Spektralbereich, wobei eine Remission erfolgt.

Die Strahlungsquelle wird nachfolgend auch als Primärlichtquelle bezeichnet; das Konversionsmedium auch als Sekundärlichtquelle.

Ferner umfasst eine erfindungsgemäße Beleuchtungseinrichtung eine Faserzuführung, bei der Licht von der Primärlichtquelle über zumindest einen Lichtleiter, der die Faserzuführung repräsentiert, und zumindest ein optisches Element zu zumindest seiner Sekundärlichtquelle geleitet wird, die das weitergeleitete Licht zumindest anteilsweise in Richtung des optischen Elements zurück reflektiert und/oder remittiert und wobei das optische Element eine geringe Abschattung des reflektierten und/oder remittierten Lichts bewirkt. Als Licht im Sinne der Erfindung wird elektromagnetische Strahlung verstanden. Diese muss nicht im sichtbaren Spektralbereich liegen, es sind insbesondere ebenso IR- und UV-Wellenlängen von der Erfindung umfasst.

Weißlichtquellen finden sich in zahlreichen Anwendungen, beispielsweise im Bereich der medizinischen Diagnostik oder der berührungslosen Messverfahren. Weitere Anwendungen können in der Beleuchtung von Gebäuden liegen. Ein weiteres, wichtiges Anwendungsgebiet stellt der Automotivbereich dar, wobei derartige Beleuchtungseinrichtungen beispielsweise im Scheinwerfer bzw. als Scheinwerfer verwendet werden können.

Aktuelle Scheinwerfer im Automotivbereich umfassen häufig LED-Lichtquellen, wie beispielsweise in dem Dokument DE 10 2008 031 256 A1 beschrieben, die eine weiße Beleuchtung ermöglichen. Als aufwendig gestaltet sich dabei typischerweise die Realisierung einer ausreichenden Kühlung bzw. einer guten Abfuhr der Wärme der Leuchtdiodeneinrichtung.

Eine andere Entwicklung zielt darauf, eine Lichtquelle über einen Lichtleiter mit einer Beleuchtungseinrichtung zu verbinden. Auf diese Weise können Lichtquelle und Beleuchtungseinrichtung räumlich voneinander entkoppelt werden. Zur Erzeugung von Weißlicht wird dabei häufig ein Konversionsmedium verwendet, welches im Bereich der Beleuchtungseinrichtung angeordnet ist. Das Konversionsmedium, auch Konverter genannt, ermöglicht dabei eine Konvertierung der eintretenden Strahlung in Bezug auf die Wellenlänge, so dass auf diese Weise weißes Licht erzeugt werden kann.

Die Patentschrift US 7,356,054 B2 beschreibt eine derartige Beleuchtungseinrichtung. Hierbei ist das Konversionsmedium direkt mit dem Ende des Lichtleiters verbunden, um eine hohe Leuchtdichte zu erzielen. Die Anregung des Konversionsmediums erfolgt demnach in Transmission, d.h. die Strahlung trifft das Konversionsmedium auf der einen Seite auf und wird über eine andere Seite abgegeben. Als nachteilig kann sich eine relativ hohe Verlustleistung im Konversionsmedium erweisen, die zu einer Erwärmung und zu einer hohen thermischen Belastung des Konversionsmediums führen kann. Die Wärmeabfuhr gestaltet sich häufig auch bei einer derartigen Anordnung von Strahlungseinrichtung und Konversionsmedium schwierig. Ungünstig für Transmission ist sowohl die Geometrie der Kühlung als auch die nur begrenzte Möglichkeit, die NA des Anregungslichts durch Streuung anzupassen, da dann Licht über Rückstreuung verloren geht.

Nach der Lehre der WO 2012 025141 ist das Problem gelöst, in dem der Faserdurchmesser klein ist im Verhältnis zum Abstand zwischen der Faser und dem Konverter. Dadurch wird durch die Faserendfläche nur ein kleiner Raumwinkelanteil abgeschattet. Die Halterung der Faser befindet sich außerhalb des Reflektors. Der Konverter wird im Abstrahlbereich des konvertierten Nutzlichts gehalten. Der Konverter benötigt zudem noch ein Kühlelement. Eine Halterung des Konverters ist nicht dargestellt, aber für eine Ausführung erforderlich. Dieser Aufbau muss zum einen filigran sein, um nicht noch weiteres Licht abzuschatten und zum anderen möglichst stabil, um eine hohe Positionsgenauigkeit von Konverter und Reflektor zu gewährleisten. Außerdem muss der Konverter noch genau zum Lichtaustritt der Faserendfläche positioniert sein. In der dargestellten Lösung ist dies nur durch einen aufwändigen mechanischen Aufbau möglich.

Die nachfolgend dargestellten Dokumente zeigen weitere Beleuchtungseinrichtungen. So zeigt das Dokument US 2011/157865 A1 eine Beleuchtungseinrichtung für eine Scheinwerferanordnung, wobei eine Laserlichtquelle schräg auf ein Fluoreszenzmaterial gerichtet wird, von wo es auf einen Parabolspiegel gerichtet wird.

Das Dokument DE 10 2010 028949 A1 beschreibt ein weiteres Scheinwerfermodul mit einer Anordnung mit einer Trägervorrichtung, bei der Anregungslicht schräg auf einen Leuchtstoff auftrifft. Die Trägervorrichtung ist dazu ausgebildet, von dem Leuchtstoff abgegebene Strahlung zu reflektieren.

Das Dokument US 2011/222149 A1 beschreibt eine weitere Beleuchtungseinrichtung, wobei ein Träger verwendet wird, auf dessen der Anregungslichtquelle zugewandter Seite in regelmäßiger Anordnung zwei unterschiedliche Konversionsmaterialien angebracht sind, so dass die Farbtemperatur des abgegebenen Lichts verändert werden kann.

Das Dokument US 2011/255264 A1 beschreibt eine weitere Scheinwerfer-Beleuchtungseinrichtung, welche in Durchlicht-Betrieb arbeitet.

Das Dokument EP 2 551 154 A2 zeigt eine weitere Beleuchtungseinrichtung mit einer Laserlichtquelle.

Schließlich zeigt das Dokument DE 10 2008 012316 A1 eine nochmals weitere Beleuchtungseinrichtung mit einer Halbleiter-Strahlungsquelle und einem Konversionselement, wobei die Wellenlängenkonversion besonders effizient sein soll.

Wünschenswert wäre demnach eine Beleuchtungseinrichtung zur Erzeugung von Licht mit hoher Leuchtdichte, insbesondere von Weißlicht, mit einer ausreichend hohen Effizienz, wobei die Wärmeabführung deutlich vereinfacht ist.

Zudem soll die Beleuchtungseinrichtung eine einfache und sichere Montage der erforderlichen Gegenstände, insbesondere einer Strahlungsquelle und eines Konversionsmediums erlauben.

Dabei soll insbesondere eine möglichst geringe Abschattung durch die Lichtzuführung stattfinden.

Zudem soll der Leuchtfleck möglichst klein sein, um eine hohe Leuchtdichte zu erzielen.

Dabei soll die Beleuchtungseinrichtung für unterschiedliche Anwendungen verwendet werden können, insbesondere sollen sie in Reflektoreinrichtungen oder Projektionseinrichtungen insbesondere auch in Scheinwerfern verwendet werden können.

Generell ist es wünschenswert, der Sekundärlichtquelle das Licht der Primärlichtquelle möglichst definiert und insbesondere auch möglichst punktförmig zukommen zu lassen. Entsprechend der Emissionsprofile der Primärlichtquelle, beispielsweise bei Diodenlasern als Primärlichtquelle, kann es dazu erforderlich werden, das von der Primärlichtquelle emittierte Licht über Lichtleitfasern zu bündeln und mit diesen zu der Sekundärlichtquelle zu leiten.

Bei Zuführung des Anregungslichts über eine Faser muss das Anregungslicht über möglichst kleine Faserdurchmesser bei möglichst geringer Numerischer Apertur NA bereitgestellt werden. In Fällen, in denen das Anregungslicht mit schlechterem Strahlparameterprodukt, welches aus dem Produkt aus NA und Faserenddurchmesser gebildet ist, bereitgestellt wird, sinkt die Leuchtdichte der Beleuchtungseinrichtung bzw. die Abschattung durch die optische Einrichtung selbst nimmt zu.

Vor diesem Hintergrund liegt eine weitere Aufgabe der vorliegenden Erfindung darin, eine Beleuchtungseinrichtung mit einer Reflektions- und/oder Remissionslichtquelle als Sekundärlichtquelle und mit Faserzuführung zur Verfügung zu stellen, die auch für Anregungslicht mit mäßigem Strahlparameterprodukt ausgelegt ist.

Überraschend einfach wird diese Aufgabe durch eine Beleuchtungseinrichtung zur Erzeugung von Licht, insbesondere Weißlicht, umfassend zumindest eine Strahlungsquelle, ein Konversionsmedium sowie eine Trägervorrichtung, nach einem der unabhängigen Ansprüche gelöst.

Bevorzugte Ausführungsformen und Weiterbildungen der Erfindung sind den jeweiligen Unteransprüchen zu entnehmen.

Demnach ist Gegenstand der Erfindung eine Beleuchtungseinrichtung zur Erzeugung von Licht, insbesondere Weißlicht, umfassend eine Anregungslichtquelle zur Abgabe von blauem Anregungslicht, ein Konversionsmedium zur Konvertierung des Anregungslichtes in langwelligeres Licht, bevorzugt in langwelligeres Licht derart, dass vom Konversionsmedium remittiertes Licht weiß erscheint, und eine Trägervorrichtung zur Ausrichtung des Anregungslichtes schräg auf einen mittleren Bereich der Oberfläche des Konversionsmediums derart, dass der Großteil des Anregungslichtes in das Konversionsmedium eindringt, um nach Konversion im Wesentlichen ohne Auftreffen auf die Trägervorrichtung in Beleuchtungsrichtung emittiert zu werden.

Die Erfinder haben herausgefunden, dass eine Beleuchtungsvorrichtung, bei der eine Konversion eines Anteils der elektromagnetischen Strahlung einer Strahlungsquelle durch Remission erfolgt, besonders günstig in Bezug auf die Wärmeabführung des Konversionsmediums und der geometrischen Gestaltung der Beleuchtungseinrichtung sein kann.

Die Beleuchtungsvorrichtung umfasst demnach zumindest eine Strahlungsquelle zur Emission elektromagnetischer Strahlung. Die von der Strahlungsquelle abgegebene elektromagnetische Strahlung wird nachfolgend auch als Anregungslicht und die Strahlungsquelle als Anregungslichtquelle oder Primärlichtquelle bezeichnet.

Die Anregungslichtquelle kann eine Lichtquelle zur Erzeugung monochromatischen Lichtes umfassen, wobei die Lichtquelle im blauen Spektralbereich emittiert. Das Licht der monochromatischen Lichtquelle kann durch einen Laser erzeugt werden. Gegenstand der Erfindung ist demnach eine Anregungslichtquelle, insbesondere eine monochromatische Lichtquelle, wobei das monochromatische Licht durch einen Laser erzeugt werden kann. Unter blauen Spektralbereich der von der Anregungslichtquelle emittierten Strahlung wird dabei derjenige Wellenlängenbereich verstanden, der überwiegend unter 500 nm, bevorzugt unter 480 nm und besonders bevorzugt unter 470 nm liegt.

In einer bevorzugten Ausführungsform umfasst die Lichtquelle zumindest einen Halbleiterlaser oder zumindest eine Laserdiode oder einen blauen Laserdiodenbarren oder ein Array aus blauen Laserdioden, welche sehr hohe Leistungsdichten erreichen können.

Die Laserquelle kann auch direkt auf der Trägervorrichtung vorgesehen sein. Eine direkte Bestrahlung des Konversionsmediums aus der Laserdiode ist dabei nachteilig, da die NA der abgegebenen Strahlung üblicherweise sehr hoch ist. Würde der Abstand deshalb sehr klein gewählt werden, würde sich aufgrund der notwendigen Einhausung eine starke Abschattung ergeben.

Daher ist es in diesem Fall besonders günstig, die Strahlung der Laserdiode über eine Optik auf das Konversionsmedium zu fokussieren. Der Aufbau ist dabei so zu wählen, dass um die Optik herum möglichst wenig Fassung vorliegt. Wenn die Anisotropie der Laserdiode nicht über die Optik korrigiert wird, ist es von Vorteil, den sich ergebenden elliptischen Leuchtfleck so auf das Konversionsmedium zu projizieren, dass die Verkippung zu einer Aufweitung der kurzen Achse führt.

Die Anregungslichtquelle kann weiterhin zumindest einen Lichtleiter oder optischen Lichtleiter umfassen mit einem Strahlung emittierenden Ende, welches mit der Trägervorrichtung verbunden werden kann. Auf dem entgegengesetzten bzw. gegenüberliegenden Ende des optischen Lichtleiters kann Anregungslicht einer Anregungslichtquelle eingekoppelt werden. In den optischen Lichtleiter wird elektromagnetische Strahlung im blauen Spektralbereich eingekoppelt.

Eine erfindungsgemäße Beleuchtungseinrichtung kann demnach zumindest einen Lichtleiter umfassen, der im Folgenden auch optischer Lichtleiter oder Faser genannt wird. Das von der Primärlichtquelle emittierte Anregungslicht wird in den Lichtleiter eingekoppelt. Bevorzugt ist eine stumpfe Kopplung, bei der keine weiteren optischen Elemente zwischen der Primärlichtquelle und dem Lichtleiter angeordnet ist. Die NA des Lichtleiters wird daher bevorzugt abhängig von dem Emissionsprofil der Primärlichtquelle und deren Lage relativ zur Eintrittsfläche des Lichtleiters gewählt.

Der vorliegenden Erfindung liegt das Konzept zugrunde, das an der jeweiligen Faserendfläche gegebene Produkt aus NA und Strahldurchmesser des Anregungslichts aus der Primärlichtquelle möglichst bis zum Auftreffen auf die Sekundärlichtquelle, i.A. den Konverter und/oder den Reflektor, zu erhalten. Dabei sollte der Aufwand für die Realisierung der optischen Einrichtung nicht unverhältnismäßig steigen.

Auf diese Weise kann die Anregungslichtquelle von der Beleuchtungseinrichtung räumlich separiert werden. Dies kann vorteilhaft sein, wenn die Anregungslichtquelle beispielsweise aufgrund der Platzverhältnisse nicht in oder im direkten Bereich der Beleuchtungseinrichtung platziert werden kann. Weiterhin kann auf diese Weise die Anregungslichtquelle auch thermisch von der Beleuchtungseinrichtung entkoppelt und somit besser gekühlt werden. Zudem ist es möglich, mit nur einer Anregungslichtquelle mehrere erfindungsgemäße Beleuchtungseinrichtungen mit Anregungslicht zu versorgen. Hierzu kann das Anregungslicht beispielsweise parallel in zumindest zwei oder mehrere optische Lichtleiter eingekoppelt werden. Der optische Lichtleiter kann hierzu auch einen Strahlteiler mit einem eingangsseitigen Ende und zumindest zwei oder mehreren ausgangsseitigen Enden umfassen.

Zur Erzielung einer besonders hohen Leuchtdichte, insbesondere zur Erzielung einer besonders hohen Leistung, ist es auch möglich, Anregungslicht von mehreren Anregungslichtquellen in einen optischen Lichtleiter einzukoppeln. Es ist aber auch möglich, Anregungslicht von mehreren Anregungslichtquellen über mehrere optische Lichtleiter zu der Beleuchtungseinrichtung zu transportieren und auf das Konversionsmedium zu emittieren. Der optische Lichtleiter kann in einer besonders bevorzugten Ausführung einen faseroptischen Lichtleiter umfassen. Typischerweise umfassen derartige Lichtleiter einen Kern- und einen Mantelbereich mit unterschiedlichen Brechungsindizes und vermögen es, beispielsweise mittels Reflexion, elektromagnetische Strahlung zu leiten. Vorzugsweise ist der optische Lichtleiter zur Leitung von blauen elektromagnetischen Strahlen ausgebildet. Es können auch andere Arten von faseroptischen Lichtleitern verwendet werden, umfassend Gradientenindexfaser-Lichteiter oder photonische Kristallfaser-Lichteiter.

Im Falle der Verwendung eines Faserbündels kann mittels Strahlformer oder diffraktiver optischer Elemente die Intensitätsverteilung der elektromagnetischen Strahlung der Anregungslichtquelle derart angepasst werden, dass bei Einkopplung in einen faseroptischen Lichtleiter jede Faser eines Faserbündels die gleiche Strahlungsenergie erhält. Ein weiteres wesentliches Merkmal einer erfindungsgemäßen Beleuchtungsvorrichtung ist die Abbildung des aus der Endfläche des Lichtleiters austretenden Anregungslichts auf die Sekundärlichtquelle mittels zumindest eines optischen Elements, vorzugsweise eines fokussierenden Elements. Die Sekundärlichtquelle wird insbesondere durch ein Konversionsmedium gebildet, auch Konverter genannt, der das Anregungslicht unter Remission und/oder Reflektion zumindest teilweise in Richtung des fokussierenden Elements remittiert und/oder reflektiert.

Dabei ist der Abschattungskegel, der durch die Abschattung des konvertierten Lichts durch das fokussierende Element oder die Faser oder deren Halterungen definiert wird, durch die Wahl und Ausgestaltung der erfindungsgemäß verwendeten optischen Elemente sehr gering. Dies bedeutet, dass nur ein kleiner Anteil des gesamten von der Primärlichtquelle emittierten Lichts auf das optische Element trifft.

Ohne Einschränkung der Allgemeinheit wird auf die folgenden optischen Elemente als Möglichkeiten zur Abbildung der Faserendfläche besonders hingewiesen, die vorzugsweise von der Erfindung umfasst sind:

- Kugellinsen und/oder Stablinsen
- GRIN-Linsen mit und ohne Spacer
- Plankonvexe Stablinsen

Zudem können Elemente zur Umlenkung des Anregungslichts in den Strahlengang eingefügt werden, um dem Bauraumbedarf eines Scheinwerfers, insbes. eines Automobilscheinwerfers oder eines Scheinwerfers für Luftfahrtanwendungen, Rechnung zu tragen oder um die Abschattung durch Halterungen zu minimieren.

Eine weitere Maßnahme zum Erhalt des Strahlparameterprodukts des Anregungslichts und damit zum Erreichen einer hohen Leuchtdichte ist das senkrechte Bestrahlen der remittierenden und/oder reflektierenden Sekundärlichtquelle. Zwar ist dann der Abschattungseffekt maximal, da der Abschattungskegel im Maximum der Lambert'schen Abstrahlcharakteristik liegt, aber durch die Abbildung kann die NA des Anregungslichtkegels und damit des Abschattungskegels möglichst klein gehalten werden. Auch die gute Lichtsammlung eines bevorzugt vorhandenen vollen parabolischen Reflektors ist hier ein Vorteil.

Ein grundlegendes Konzept der Erfindung ist die Abbildung der Lichtverteilung aus dem Lichtleiter, insbesondere einer Einzelfaser, auf den Konverter. An Stelle einer Einzelfaser kann hier auch ein Faserbündel abgebildet werden. Einzelfaser als auch Faserbündel fallen unter den Begriff Lichtleiter und damit auch unter den Begriff Faser. Dieses Konzept kann eine Option für die Leistungsskalierung der Lichtquelle sein, wenn z.B. jede Faser des Faserbündels von einer Laserdiode gespeist wird, so dass die Leistungserhöhung durch Hinzufügen weiterer Fasern in das Faserbündel erreicht werden kann. Zudem kann durch geeignete Anordnung der Fasern in dem Faserbündel auch die Abstrahlcharakteristik des Scheinwerfers positiv beeinflusst werden. Durch selektives Ein- und Ausschalten von Laserdioden, die einer bestimmten Faserposition zugeordnet sind, kann diese Abstrahlcharakteristik auch gesteuert werden, um z.B. ein adaptives Fernlicht zu erzeugen.

Die Erfindung wird weiter anhand von Zeichnungen und Beispielen erläutert. Alle Zeichnungen sind rein schematisch, ihre Proportionen müssen nicht maßstäblich sein und ihre Dimensionen und/oder Proportionen können von den real existierenden Gegenständen abweichen.

Beispiel:

Das Anregungslicht der Primärlichtquelle wird in einen Lichtleiter an dessen Eintrittsende eingekoppelt, wird in diesem geleitet und tritt an dessen Austrittsende aus. In dem dargestellten Beispiel ist der Lichtleiter eine Einzelfaser mit 180 $\mu$m Durchmesser und einer NA von 0,22. Die Spotgröße des anregenden Lichts auf der Sekundärlichtquelle, im Beispiel dem Konverter, soll etwa 400 $\mu$m sein, um einen Sekundärspotdurchmesser von < 600 $\mu$m zu gewährleisten.

Damit sind die Parameter der Abbildung wie folgt:

Abbildungsverhältnis: $\beta'$ = -2

$$\beta' = \frac{a'}{a}$$

Bezug zu Objektweite a und Bildweite a':

$$\frac{1}{a'} - \frac{1}{a} = \frac{1}{f'} \qquad a = -\frac{3}{2}f'$$

Aus der Abbildungsgleichung folgt: bzw. $a' = 3f'$

Um die Länge der "Lichtlanze" und damit die Justagetoleranzen möglichst gering zu halten, sollten a' und damit f' möglichst klein sein.

Beliebig kleine Brennweiten sind jedoch nicht realisierbar. Die begrenzenden Faktoren sind bei unterschiedlichen Realisierungskonzepten unterschiedlich.

Um die erforderliche Abbildung zu erhalten, werden erfindungsgemäß optische Elemente zwischen dem Austrittsende des Lichtleiters und der Sekundärlichtquelle angebracht. Als optische Elemente werden bevorzugt die Vorgenannten eingesetzt. Daraus ergeben sich die folgenden Beispiele.

**Realisierung mit Kugellinse oder Stablinse als optischem Element:**

Die Brennweite einer Kugellinse ist gegeben durch

$$f' = \frac{n}{2\,(n-r)}\,r\,.$$

Für n=1.5 gilt $f'$ = 1.5 $r$ und damit für das Beispiel a' = 4.5r

Bei der Kugellinse kann die Abschattung jedoch groß sein (NA Abschattung >0,2 im Vergleich zur NA bildseitiges Bündels = 0,1). Dies kann man durch eine Stablinse mit sphärischen Linsenflächen verbessern, deren Durchmesser an die Abbildung angepasst ist. Ob eine Kugellinse, eine Stablinse mit sphärischen Flächen oder gar eine Stablinse mit asphärischen Linsenflächen verwendet wird, wird durch eine Abwägung zwischen Aufwand und minimaler Abschattung entschieden. Kugellinsen sind im allgemeinen günstiger als Stablinsen, weisen aber eine größere Abschattung auf.

Beliebig kleine Brennweiten sind nicht realisierbar, da der Durchmesser des kreisförmigen Querschnitts der Stablinse zumindest größer als der Emissionsspot der Faser sein muss.

Geeignet ist eine auf einem Kreisradius von 1,25 mm basierende Kugellinse mit einem Durchmesser von ca. 1 mm.

Zur Herstellung einer einsetzbaren optischen Einrichtung ist eine Fixierung des optischen Elements notwendig. Dazu können Kugellinsen exakt in Hülsen eingepresst werden, Stablinsen können in Nuten eingepasst werden.

**Realisierung mit GRIN-Linse als optisches Element:**

Ein geeignetes GRIN-Linsen Design mit sehr geringer NA des Abschattungskegels wurde hergestellt und verbaut. GRIN-Linsen (GRIN- / Gradienten-Index-Linsen) nutzen die optischen Eigenschaften kontinuierlicher Materialübergänge. GRIN-Linsen sind üblicherweise zylinderförmige, transparente optische Bauteile mit einem in radialer Richtung abnehmenden Brechungsindex. Meist nimmt der Brechungsindex quadratisch mit dem Abstand zur Mitte ab (Parabelfunktion). Ein kurzer Stab aus einem solchen Material wirkt wie eine gewöhnliche Sammellinse, besitzt aber an den Lichtein- und Lichtaustrittsseiten plane Oberflächen.

Allerdings sind bei einer GRIN-Linse die Abbildungsfehler im äußeren Bereich der Linse gravierend, wenn nicht ein speziell optimiertes Brechzahlprofil eingesetzt wird. Ein Aufbau mit Standardkomponenten wird eine höhere Abschattungs-NA haben.

Eine bevorzugte optische Einrichtung nutzt daher einen Spacer zwischen Faserendfläche und GRIN-Linse. Designs ohne Spacer haben typischerweise eine höhere NA des Abschattungskegels

Zur Assemblierung werden GRIN-Linsen typischerweise an die Fasern gekittet. Kombinationen von GRIN-Linsen und Umlenkprismen sind dem Fachmann hinlänglich bekannt.

**Realisierung mit plankonvexer Stablinse:**

Plankonvexe Stablinsen können ähnlich wie GRIN-Linsen assembliert und mit Umlenkprismen kombiniert werden. Jedoch ist die Brechkraft von Plankonvexen Stablinsen einer Brechzahl von n = 1,5 begrenzt, so dass die Kombination mit hochaperturigen Fasern nicht möglich ist. In diesem Fall müssten hochbrechende Halbkugellinsen (z.B. Saphir, n = ca. 2) verwendet werden.

**Realisierung mit Faserbündel statt Einzelfaser:**

An Stelle der Faserendfläche kann auch ein Faserbündel abgebildet werden. Dieses muss nicht notwendigerweise einen runden Querschnitt aufweisen, sondern kann z.B. einen rechteckigen Querschnitt ausfüllen. So kann die Abstrahlcharakteristik eines Auto-Scheinwerfers angepasst werden, um z.B. in horizontaler Richtung einen größeren Abtstrahlwinkel als in vertikaler Richtung zu erreichen. Bei einzelner Ansteuerung der Fasern kann eine adaptive Abstrahlcharakteristik erreicht werden. Bei stark asymmetrischen Querschnitten des Faserbündels kann es vorteilhaft sein, die Form des abbildenden Elements anzupassen und z.B. eine Stablinse zusätzlich abzuflachen.

Der Lichtleiter selbst besteht bevorzugt zumindest als Hauptbestandteil aus Glas, bevorzugt einen Multikomponentenglas, oder aus Quarz. Der Lichtleiter kann aus einem Kern aus den genannten Materialien bestehen, der bevorzugt von einem Mantel mit erheblich geringerer Mantelstärke aus der gleichen Materialklasse umgeben ist und der einen geringeren Brechungsindex als das Material des Kerns aufweist. Der Lichtleiter kann auch, auch als weiterer Mantel, zumindest abschnittsweise von einem Schutzmantel z.B. aus Kunststoff und/oder Glasgeflecht ummantelt sein. Dieser weitere Mantel kann den Lichtleiter vor mechanischen Beschädigungen schützen.

Die Anregungslichtquelle ist vorzugsweise mit der Trägervorrichtung fest und lösbar verbunden. Die Trägervorrichtung kann daher mit Befestigungsmitteln für eine Positionierung und Fixierung der Anregungslichtquelle ausgebildet sein, wodurch ein einfaches und sicheres Austauschen der Anregungslichtquelle ermöglicht werden kann. Hierzu kann die Trägervorrichtung beispielsweise mit Positionierhilfen, etwa Anschlägen oder Stiften, zur Aufnahme der Anregungslichtquelle ausgebildet sein.

Zur Aufnahme eines oder mehrerer optischen Lichtleiter kann die Trägervorrichtung vorteilhaft mit Rillen oder Nuten ausgebildet sein, in die der optische Lichtleiter eingelegt und mit einem Niederhalter befestigt werden kann. Als besonders geeignet haben sich hierzu auch V-Grooves herausgestellt, welche besonders geeignet sind für eine hochgenaue Positionierung optischer Lichtleiter. Auf diese Weise kann besonders günstig eine stabile Führung auch von mechanisch instabilen optischen Lichtleitern ermöglicht werden. Mittels eines Niederhalters kann der optische Lichtleiter fixiert werden.

Eine exakte, hochgenaue räumliche Positionierung und Orientierung der Anregungslichtquelle in Bezug auf das Konversionsmedium ist sehr wichtig, um einen genau bestimmten Bereich des Konversionsmediums zu bestrahlen.

Die Positionierung und Orientierung der Anregungslichtquelle erfolgt vorzugsweise derart, dass das Anregungslicht in Richtung auf das Konversionsmedium emittiert wird. Hierzu wird die Anregungslichtquelle besonders bevorzugt derart angeordnet, dass das Anregungslicht schräg auf einen mittleren Bereich der Oberfläche des Konversionsmediums auftrifft.

Das Konversionsmedium kann ein geometrisch bestimmter Körper mit unterschiedlicher geometrischer Form sein, beispielsweise in Form eines Quaders mit sechs Flächen oder eines Plättchens. Die zumindest eine Fläche des Konversionsmediums ist dazu bevorzugt derart angeordnet, dass das Anregungslicht auf einen mittleren Bereich auftrifft. Im Fall eines Quaders kann dies das Zentrum einer Fläche sein. Das mittlere Auftreffen ist besonders günstig in Bezug auf die Wärmeverteilung im Konversionsmedium. Zudem kann auch die Effizienz verbessert werden. So sollte im Falle eines Konversionsmediums mit einem Körper, der Kanten aufweist, darauf geachtet werden, dass das Anregungslicht nicht auf eine Kante auftrifft, da dies zu einer inhomogenen Wärmeverteilung und zu einer geringeren Effizienz der Remission führen kann.

Für eine hohe Leuchtdichte ist es günstig, wenn ein möglichst großer Anteil des Anregungslichtes einen möglichst kleinen Bereich des Konversionsmediums bestrahlt. Dieser Bereich der Oberfläche des Konversionsmediums, der direkt im Strahlengang des Anregungslichtes liegt, wird nachfolgend auch als Leuchtfleck bezeichnet. Für eine hoch effiziente Beleuchtungseinrichtung ist eine exakte Positionierung des Leuchtflecks notwendig, daher ist die exakte Lage des Leuchtflecks in Bezug zu Positionierhilfen der Beleuchtungseinrichtung von sehr hoher Bedeutung.

Das Konversionsmedium ist derart im Strahlengang der Anregungslichtquelle angeordnet, also entlang des optischen Pfades des Anregungslichtes, dass ein möglichst großer Anteil des Anregungslichtes auf das Konversionsmedium auftrifft. Die von dem Konversionsmedium emittierte elektromagnetische Strahlung wird nachfolgend auch als Sekundärstrahlung bezeichnet. Die Sekundärstrahlung umfasst demnach die vom Konversionsmedium emittierte Strahlung, somit konvertierte, gestreute und/oder reflektierte Strahlung.

Zur Erzielung einer hohen Leuchtdichte und einer hohen Effizienz ist die Ausbildung eines möglichst kleinen Leuchtfleckes und eine möglichst geringe Abschattung durch die Lichtzuführung von hoher Bedeutung, wobei eine geringe Größe der Beleuchtungseinrichtung und ein geringer mechanischer Aufwand zur exakten Positionierung von großem Vorteil sind.

Die Leuchtdichte und die Effizienz können durch den Abstand zwischen Anregungslichtquelle und Konversionsmedium, der Größe der Anregungslichtquelle und die NA des Anregungslichtes beeinflusst werden.

Durch die geometrische Anordnung von Anregungslichtquelle und Konversionsmedium kann sich der Nachteil ergeben, dass die Anregungslichtquelle im Bereich des Strahlengangs, also entlang des optischen Pfades, der Sekundärstrahlung liegt, da das Anregungslicht nicht transmittiert, sondern remittiert wird. Dies kann zu unerwünschten Abschattungseffekten führen, da die Anregungslichtquelle und/oder die Trägervorrichtung im Strahlengang der Sekundärstrahlung liegen.

Um diese unerwünschten Abschattungseffekte zu minimieren, kann der Abstand zwischen Anregungslichtquelle und Konversionsmedium vergrößert werden. Eine Vergrößerung des Abstandes kann aber zu einem deutlichen Verlust an Leuchtdichte führen, da mit größer werdenden Abstand typischerweise der Leuchtfleck vergrößert wird und die Leuchtdichte dementsprechend abnimmt.

Die Erfinder haben herausgefunden, dass ein geringer Abstand und eine geringe Abschattung erreicht werden können, wenn das Konversionsmedium um einen bestimmten Winkel in Relation zu dem optischen Pfad des Anregungslichtes gedreht wird, so dass das Anregungslicht schräg auf die Oberfläche des Konversionsmediums auftrifft.

Auf diese Weise kann erreicht werden, dass der optische Pfad des Anregungslichtes und der optische Pfad der Sekundärstrahlung nicht parallel zueinander liegen. In anderen Worten, der überwiegende Anteil der Sekundärstrahlung ist nicht auf die Anregungslichtquelle und/oder die Trägervorrichtung gerichtet. Zur Erreichung einer besonders kompakten und mechanisch einfachen Bauform, die eine besonders hohe Genauigkeit der Lage des Leuchtflecks ermöglicht, können in einer besonders bevorzugten Ausführungsform Anregungslichtquelle und Konversionsmedium auf einer gemeinsamen Trägervorrichtung angeordnet sein, so dass Anregungslicht in einem bestimmten Winkel auf das Konversionsmedium auftrifft.

Auf diese Weise konnten besonders günstige Abstände zwischen dem Emissionsort des Anregungslichtes und einem mittleren Punkt des Leuchtflecks auf der Oberfläche des Konversionsmediums in einem Bereich von 0,3 mm bis 5 mm realisiert werden bei Verwendung eines optischen Lichtleiters.

Bei Verwendung einer Laserlichtquelle als Anregungslichtquelle mit einer fokussierenden Optik liegt ein besonders günstiger Abstand zwischen dem Emissionsort des Anregungslichtes und einem mittleren Punkt des Leuchtflecks auf der Oberfläche des Konversionsmediums in einem Bereich von 1 mm bis 30 mm.

Eine günstige NA kann in einem Bereich von 0,02 bis 0,3 liegen.

Die Größe der Anregungslichtquelle bei Verwendung eines optischen Lichtleiters ergibt sich aus der NA und dem Strahlparameterprodukt der Laserlichtquelle, dass sich bei der Einkopplung der elektromagnetischen Strahlung in den Lichtleiter ergibt.

Multimodelaser mit Leistungen im Bereich von 1 W optisch und einer Strahlung im Bereich von ca. 400 nm bis 450 nm können ein Strahlparameterprodukt von ca. 0,5 mm*mrad bis 1 mm*mrad aufweisen.

Da Laserdioden normalerweise anisotrop sind, wird die Strahlung unter verschiedenen Winkeln abgegeben. In der Richtung, in der die Laserzone schmal ist, ist der Öffnungswinkel der Strahlung groß, und umgekehrt. Diese Anisotropie beträgt typischerweise einen Faktor von ca. 5 bis 10. Wenn das Licht der Laserdiode über eine rotationssymmetrische Linse in einen faseroptischen Lichtleiter eingekoppelt wird, erhöht sich das Strahlparameterprodukt am ausgangsseitigen Ende des Lichtleiters dadurch um den Faktor der Anisotropie, da die Winkelinformation im Azimuth verloren geht. Diese Erhöhung des Strahlparameterproduktes lässt sich vermeiden, wenn die beiden unterschiedlichen Winkelverteilungen durch beispielsweise eine Zylinderlinse oder eine anamorphotische Linse aneinander angepasst werden.

Um eine möglichst effiziente Einkoppelung in den faseroptischen Lichtleiter zu gewährleisten, kann die Abbildung des Lasers etwas kleiner sein als der Kern des faseroptischen Lichtleiters. Dies kann ebenfalls eine Erhöhung des Strahlparameterprotokolls bewirken. Am ausgangsseitigen Ende des faseroptischen Lichtleiters kann sich dann ein Strahlparameterprodukt von etwa 10 mm*mrad einstellen.

Die Größe der Anregungslichtquelle bei direkter Anordnung einer Laserlichtquelle als Anregungslichtquelle ergibt sich aus der Höhe des Aufbaus und des Gehäuses der Lichtquelle. Besonders gute Erfahrungen wurden gemacht bei einem Winkel zwischen dem optischen Pfad des Anregungslichtes und einer Normalen zu der Oberfläche des Konversionsmediums in einem Bereich von 30° bis 75°.

Das Konversionsmedium kann durch die auftreffende Strahlung in einem bestimmten Bereich angeregt werden. Zur Erzielung einer hohen Effizienz und/oder einer hohen Leuchtdichte ist der Leuchtfleck möglichst klein zu halten. Ein derartiger Leuchtfleck kann beispielsweise eine Fläche umfassen, die kleiner als etwa 1 mm x 1,5 mm, besonders bevorzugt kleiner als etwa 0,6 mm x 0,9 mm in ihrer Ausdehnung ist.

Typischerweise ist der Leuchtfleck von ovaler Form aufgrund der Verkippung des Konversionsmediums. Das Konversionsmedium dient der Konvertierung des Anregungslichtes in langwelligeres Licht derart, dass vom Konversionsmedium remittiertes Licht weiß erscheint.

Die Remission des Anregungslichtes durch das Konversionsmedium kann im Sinne der Erfindung dazu genutzt werden, dass ein Anteil des Anregungslichtes in langwelliges, gelbes Licht konvertiert wird und ein weiterer Anteil als blaues Licht gestreut und/oder reflektiert wird. Ein erster Anteil des Anregungslichtes wird demnach in einen gelben Spektralbereich konvertiert.

Weiterhin kann ein Anteil im grünen Spektralbereich des konvertierten gelben Lichtes herausgefiltert werden, um auf diese Weise einen weißen Farbort des remittierten Lichtes zu erhalten, wenn die Farbgerade zwischen dem Farbort des Anregungslicht und Farbort des konvertierten Lichts nicht den gewünschten Weiss-Farbort schneidet, sondern in CIE-y nach oben abweicht.

Falls die Farbgerade unterhalb dieses Bereiches liegt, somit also der CIE-y zu gering ist, kann auch ein Rotanteil ausgefiltert werden.

Bei einer Konvertierung entsteht typischerweise Wärme im Konversionsmedium, die ohne eine geeignete Abführung zu einer Beeinträchtigung der Strahlungskonvertierung, etwa zu einer Reduzierung der Effizienz der Konvertierung, oder sogar zu einer Zerstörung des Konversionsmediums führen kann.

Bei der Remission ergibt sich der Vorteil, dass das Konversionsmedium rückseitig gehalten werden kann, da das Anregungslicht nicht transmittiert wird.

Hierdurch kann eine Wärmeabfuhr des Konversionsmediums sehr einfach und kostengünstig über eine rückseitige Befestigung des Konversionsmediums erfolgen. Besonders vorteilhaft kann diese rückseitige Halterung über eine Wärmeableitung verfügen und/oder thermisch an einen Kühlkörper angebunden sein, um eine einfache und effiziente Wärmeabfuhr zu ermöglichen.

Auf diese Weise kann eine Ausgangslichtquelle mit sehr hoher Leuchtdichte verwendet werden, die bei hohen Temperaturen betrieben werden kann und dennoch Licht in der Nähe des Weißpunktes erzeugen kann.

Unter einem Konversionsmedium wird also im Sinne der Erfindung ein Material zur optischen Konversion verstanden. Derartige Materialien enthalten typischerweise Leuchtstoffe, welche als optisch aktive Medien die Konversion bewirken.

Gegenstand der Erfindung kann demnach weiterhin ein Konversionsmedium sein, das zu einer Konvertierung des Anregungslichtes in langwelligeres Licht derart geeignet ist, dass von Konversionsmedium remittiertes Licht weiß erscheint.

Das Konversionsmedium kann dabei zur Erzeugung von Weißlicht vorteilhaft derart ausgebildet sein, dass es besonders gut für eine Remission elektromagnetischer Strahlung im blauen und/oder ultravioletten Spektralbereich geeignet ist.

Ein geeignetes Material für das Konversionsmedium hat sich weiterhin ein optokeramisches Material für eine Verwendung von Anregungslicht im blauen Spektralbereich mit eingelagerter Kornstruktur erwiesen.

Besonders bevorzugt umfasst das Konversionsmedium ein niedrig dotiertes, insbesondere mit weniger als 0,2 Gew.-% dotiertes Ce:YAG Phosphor-Material. Eine geringe Dotierung ist vorteilhaft im Hinblick auf eine Vermeidung von Konzentrations-Quenching.

Zur Erreichung eines weißen Farbortes der Sekundärstrahlung kann dann besonders günstig ein Anteil aus dem kurzwelligen, grünen Spektralbereich aus dem gelb konvertierten Licht gefiltert werden. Vorteilhaft kann dies der Bereich < 530 nm sein. Eine derartige Filterung kann zu einer geringeren Effizienz der Konvertierung führen. Durch eine Verwendung einer Ausgangslichtquelle mit sehr hoher Leuchtdichte kann dieser Nachteil aber wieder vermindert werden.

Die genaue Farbanpassung kann vom Strahlungsspektrum des Anregungslichts, vom zu erreichenden Farbort oder von der Erwärmung des Konversionsmediums bzw. einer Kühlung desselben abhängen.

In einer besonders bevorzugen Ausführungsform ist das Konversionsmedium auf einem breitbandig reflektierenden Material, beispielsweise einem Spiegel, einem Metallspiegel oder auch einer spiegelnden Oberfläche, aufgebracht, wobei ein Bandstopfilter auf der der Anregungslichtquelle zugewandten Seite aufgebracht sein kann. Dieser Bandstopfilter kann vorzugsweise die Emission von konvertierter Strahlung im Wellenlängenbereich von etwa 480 nm bis 510 nm unterdrücken. Besonders günstig wird Strahlung dieser Wellenlänge wieder zu dem Konversionsmedium zurückreflektiert. Diese Strahlung kann dann erneut konvertiert werden, so dass besonders günstig der Effizienzverlust durch den Filter reduziert werden kann.

In einer weiteren besonders bevorzugten Ausführungsform kann ein AR-Coating auf die Oberfläche des Konversionsmediums aufgebracht sein, wobei besonders günstig ein W-förmiges Coating ausgewählt werden kann. Ein derartiges Coating kann reflexmindernd für das Anregungslicht und das konvertierte, langwelligere Licht wirken und damit die Konvertierung begünstigen. Für einen Einfall eines Anregungslichts mit einer Wellenlänge von 450 nm unter einem Winkel von 60° zur Oberflächennormale auf eine Ce:YAG-Keramik mit einer Brechzahl von 1,83 kann ein einschichtiges AR-Coating aus SiO2 mit einer Dicke von 94 nm besonders günstig sein.

Die Verwendung eines Gadolinium-freien optokeramischen Konversionsmediums kann zudem vorteilhaft aufgrund der vergleichsweise hohen Wärmebeständigkeit sein. Besonders bevorzugt kann ein optokeramisches Material aus Ce:YAG mit einer Wärmeleitfähigkeit von mindestens 5 W/ (m*K) verwendet werden, um besonders hohe Leuchtdichten zu erreichen. So können derartige Konversionsmedien beispielsweise bei Temperaturen bis über 200°C ohne Beeinträchtigung der Konversionseigenschaften bzw. ohne Schädigung verwendet werden.

In einer besonders bevorzugten Ausführungsform zur Erzeugung von Weißlicht liegt ein erster Anteil der konvertierten Strahlung im gelben Spektralbereich mit einem Schwerpunkt im Bereich von etwa 550 nm bis 620 und ein zweiter Anteil der reflektierten Strahlung im blauen Spektralbereich, so dass durch die Mischung dieser Spektralbereiche ein Licht entsteht, welches für einen Betrachter weiß aussieht.

Dabei kann das Konversionsmedium vorteilhaft direkt mit der Trägervorrichtung der Beleuchtungseinrichtung fest und lösbar verbunden sein, d.h. die Trägervorrichtung kann mit Mitteln zum Befestigen des Konversionsmediums ausgebildet sein.

Das Konversionsmedium kann aber auch mit einer Halterung verbunden sein, welche mit der Trägervorrichtung fest und lösbar verbunden sein kann. Die Befestigung der Anregungslichtquelle und des Konversionsmediums auf einer gemeinsamen Trägervorrichtung kann aber von großem Vorteil sein im Hinblick auf eine hochgenaue Positionierung beider Bauteile zueinander und der Realisierung einer sehr kompakten Bauform.

Die Trägervorrichtung und/oder die Halterung zum Befestigen des Konversionsmediums ist bevorzugt für eine gute Wärmeableitung ausgebildet. Hierzu können die Trägervorrichtung und/oder die Halterung beispielsweise Kühlrippen aufweisen. Sie können aber auch thermisch an einen Kühlkörper angebunden sein.

Somit lässt sich eine sehr einfache und kompakte Beleuchtungseinrichtung zur Erzeugung von Licht, insbesondere von Weißlicht, mit sehr hoher Leuchtdichte realisieren, wobei der Grossteil des Anregungslichtes in das Konversionsmedium eindringt, um nach Konversion im wesentlichen ohne Auftreffen auf die Trägervorrichtung in Beleuchtungsrichtung emittiert zu werden.

In einer weiterhin bevorzugten Ausführungsform kann die Anregungslichtquelle einen optischen Lichtleiter mit einer räumlich separierten Anregungslichtquelle umfassen. So kann eine defekte Anregungslichtquelle einfach ausgetauscht werden, ohne dass die Beleuchtungseinrichtung demontiert werden muss.

Aufgrund der kompakten Bauform kann die Beleuchtungseinrichtung auch drehbar oder beweglich in einem oder mehreren Freiheitsgraden eingebaut werden, um eine Veränderung der Beleuchtungsrichtung zu bewirken.

In einer Weiterbildung der Erfindung kann ein optisches Element zur Fokussierung im Strahlengang zwischen der Anregungslichtquelle und dem Konversionsmedium angeordnet sein. Hierdurch kann das Anregungslicht auf das Konversionsmedium fokussiert werden, wodurch ein besonders kleiner Leuchtfleck erzeugt und die Leuchtdichte verbessert werden kann. Für eine optimale Konvertierung kann so der Fokus des Anregungslichtes innerhalb des Konversionsmediums liegen.

Die Erfindung und/oder Beleuchtungseinrichtungen enthaltend die erfindungsgemäße optische Einrichtung kann in einer Vielzahl von Anwendungsgebieten eingesetzt werden. Besonders geeignet sind Lichtquellen mit hoher Leuchtdichte, insbesondere Scheinwerfer. Der Gegenstand der vorliegenden Erfindung betrifft demnach einen Scheinwerfer zur Beleuchtung. Dabei ist die Beleuchtungsvorrichtung derart ausgebildet, dass der Leuchtfleck im Arbeitspunkt des Reflektors angeordnet ist.

Ebenso kann die Beleuchtungseinrichtung auch für einen Projektor verwendet werden, wobei der Leuchtfleck im Arbeitspunkt eines Linsensystems des Projektors angeordnet sein kann.

Ferner betrifft die Erfindung einen Scheinwerfer für eine Verwendung in Fahrzeugen, welcher eine erfindungsgemäße Beleuchtungseinrichtung umfasst. Hierzu kann der Reflektor als Scheinwerfer ausgebildet sein bzw. der Scheinwerfer eine erfindungsgemäße Beleuchtungseinrichtung derart umfassen, dass der Leuchtfleck des Konversionsmediums im Arbeitspunkt des Scheinwerferreflektors liegt. Bei einer Verwendung der erfindungsgemäßen Beleuchtungseinrichtung für einen Scheinwerfer ist das Konversionsmedium entsprechend den Vorgaben und Richtlinien, betreffend Weißlicht für Fahrzeuge, auszuwählen. Für Fahrzeugscheinwerfer ist dies beispielsweise in entsprechenden ECE-Regelungen und CIE-Normen festgelegt. Um tagesähnliche Lichtfarben zu erreichen, kann ein Farbort im Bereich von 5500 K bis 6500 K günstig sein. Hierzu kann ein Konversionsmedium ausgewählt werden, welches in Abhängigkeit des Strahlungsspektrums das Anregungslicht in eine Sekundärstrahlung mit einer einem weißen Farbort entsprechende Strahlungscharakteristik konvertiert.

Weitere Einzelheiten der Erfindung ergeben sich aus der Beschreibung der dargestellten Ausführungsbeispiele und den angefügten Ansprüchen.

Die Zeichnungen zeigen:

| | |
|---|---|
| Figur 1 | eine schematische Seitenansicht der Beleuchtungseinrichtung, |
| Figur 2 | eine schematische Draufsicht auf eine Trägervorrichtung, |
| Figur 3 | eine schematische Seitenansicht einer Weiterbildung der Beleuchtungseinrichtung, |
| Figur 4 | eine schematische Seitenansicht einer weiteren Weiterbildung der Beleuchtungseinrichtung, |
| Figur 5 | eine schematische Seitenansicht einer nochmals weiteren Weiterbildung der Beleuchtungseinrichtung, |
| Figur 6 | eine Sicht auf ein schräg angeordnetes Konversionsmedium mit einer Beschichtung, |
| Figur 7 | eine weitere Ausführungsform mit mehreren parallel angeordneten Lichtleitern, |
| Figur 8 | eine nochmals weitere Ausführungsform, bei der der Abstand des Emissionsortes eines jeden Lichtleiters von dem Leuchtfleck gleich groß ist, |
| Figur 9 | eine mögliche Anordnung einer Beleuchtungseinrichtung in einem Reflektor, |
| Figur 10 | eine weitere Ausführungsform einer Beleuchtungseinrichtung schräg in einem Reflektor, |
| Figur 11 | eine Anordnung einer Beleuchtungseinrichtung in einer Projektionseinrichtung, |
| Figur 12 | eine Anordnung mit einer monochromatischen Lichtquelle und einer optischen Linse, |
| Figur 13 | eine weitere Anordnung, bei der das Anregungslicht schräg auf die Oberfläche des Konversionsmediums auftrifft, |
| Figur 14 | ein Schema einer erfindungsgemäßen Beleuchtungseinrichtung, |
| Figur 15 | eine Vergrößerung des Ausschnittes der Austrittsfläche des Lichtleiters, |
| Figur 16 | exemplarisch den Strahlengang einer Stablinse, |
| Figur 17 | eine plankonvexe Stablinse als optisches Element, |
| Figur 18 | eine GRIN-Linse mit Spacer als optisches Element, |
| Figur 19 | eine GRIN-Linse ohne Spacer als optisches Element, |
| Figur 20 | eine Beleuchtungseinrichtung, bei der das Licht umgelenkt wird, |
| Figur 21 | eine Beleuchtungseinrichtung, bei der das optische Element zwischen Umlenkeinrichtung und Sekundärlichtquelle angebracht ist, |
| Figur 22 | eine schematische Darstellung einer Beleuchtungseinrichtung eines Scheinwerfers, |
| Figur 23 | eine Anordnung in einem Scheinwerfer mit einem Reflektor, |
| Figur 24 | einen Scheinwerfer mit einem symmetrischen Reflektor und |
| Figur 25 | eine schematische Darstellung einiger Faserbündel. |

Detaillierte Beschreibung bevorzugter Ausführungsformen

Bei der nachfolgenden detaillierten Beschreibung bevorzugter Ausführungsformen bezeichnen um der Klarheit willen gleiche Bezugszeichen im Wesentlichen gleiche Teile in oder an diesen Ausführungsformen.

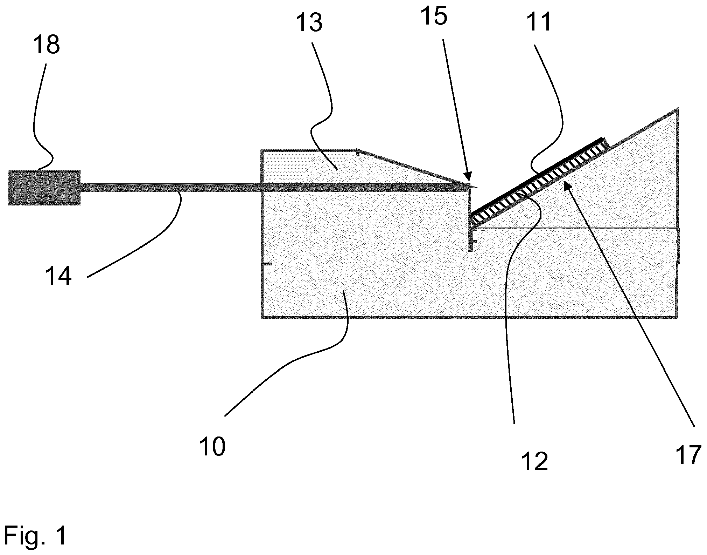

Figur 1 zeigt eine schematische Seitenansicht einer erfindungsgemäßen Beleuchtungseinrichtung im Querschnitt. Die Anregungslichtquelle umfasst einen optischen Lichtleiter, der als faseroptischer Lichtleiter 14 ausgebildet ist und in den elektromagnetische Strahlung einer Anregungslichtquelle 18 eingekoppelt wird. Der Lichtleiter 14 emittiert eingekoppelte elektromagnetische Strahlung als Anregungslicht an seinem einen Ende 15 in Richtung auf ein Konversionsmedium 11.

Die Trägervorrichtung 10 ist im Bereich der Befestigung des Konversionsmediums 11 mit einer Verspiegelung 12 versehen. Dies kann beispielsweise eine Beschichtung der entsprechenden Kontaktfläche 17. Des weiteren kann die Halterung auch mit einem Spiegel oder einem metallischen Spiegel ausgebildet sein. Das Konversionsmedium kann fest und/oder lösbar mit der Trägervorrichtung 10 verbunden sein.

Ein Niederhalter 13 dient der Fixierung des zumindest einen optischen Lichtleiters 14. Eine Zugentlastung (nicht dargestellt) kann zur Sicherung des faseroptischen Lichtleiters vorgesehen sein. Besonders günstig ist der Niederhalter 13 sehr flach ausgebildet, um die Abschattung zu minimieren. Ein Niederhalter 13 ist nicht zwingend vorgeschrieben; beispielsweise kann der optische Lichtleiter auch in oder auf die Trägervorrichtung geklebt werden.

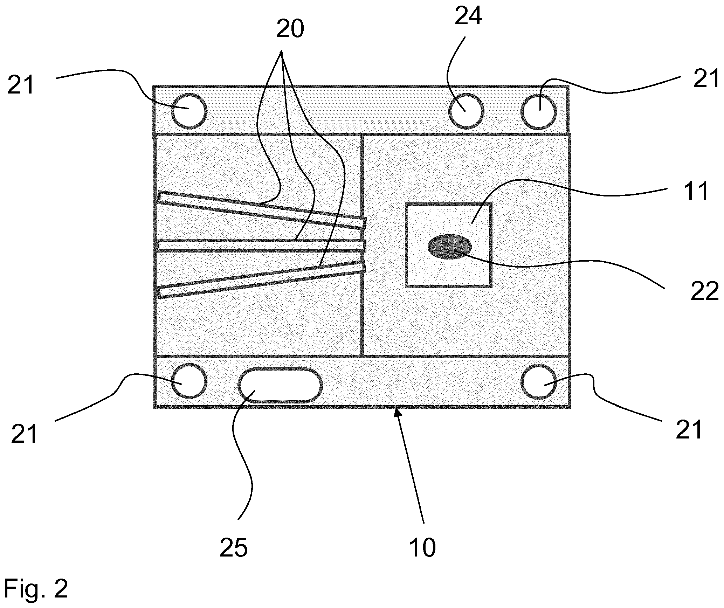

Figur 2 zeigt eine schematische Draufsicht auf eine Trägervorrichtung 10, umfassend ein Konversionsmedium 11. Insgesamt drei Nuten bzw. Rillen 20 sind vorgesehen, um faseroptische Lichtleiter (nicht dargestellt) als Anregungslichtquelle aufzunehmen. Besonders günstig sind die Nuten bzw. Rillen 20 als sogenannte V-Grooves ausgebildet, welche eine sehr gute Aufnahme von faseroptischen Lichtleitern ermöglichen, ohne diese zu schädigen. Das Vorhandensein von drei Aufnahmemöglichkeiten für Lichtleiter 14 stellt eine mögliche Ausführungsform dar, ist aber nicht zwingend für eine erfindungsgemäße Beleuchtungseinrichtung. Vielmehr richtet sich die Anzahl der optischen Lichtleiter 14 nach den Erfordernissen der bestimmten Verwendung, beispielsweise nach zu erreichenden Leuchtdichte oder der zu tolerierenden Temperatur der Anregungslichtquelle.

Die zumindest eine Aufnahmevorrichtung für Lichtleiter 14 ist derart ausgebildet, dass das eine Ende des Lichtleiters 14 in Richtung auf das Konversionsmedium 11 weist. Das Konversionsmedium 11 liegt demnach in der Richtung des optischen Pfades des Anregungslichtes. Das Anregungslicht trifft besonders vorteilhaft in einem bestimmten Punkt auf die Oberfläche des Konversionsmediums auf, der auch als Leuchtfleck 22 bezeichnet werden kann. Zur Erreichung einer hohen Effizienz und/oder einer hohen Leuchtdichte ist der Leuchtfleck 22 möglichst klein zu halten.

Die Trägervorrichtung 10 ist weiterhin mit Öffnungen und/oder Bohrungen 21 ausgebildet zur Befestigung mit weiteren Gegenständen wie beispielsweise einem Reflektor (nicht dargestellt). Für eine hochgenaue Positionierung und/oder Orientierung der Trägervorrichtung kann diese beispielsweise mit Langlöchern 25 und Bohrungen 24 für Paßstifte ausgebildet sein.

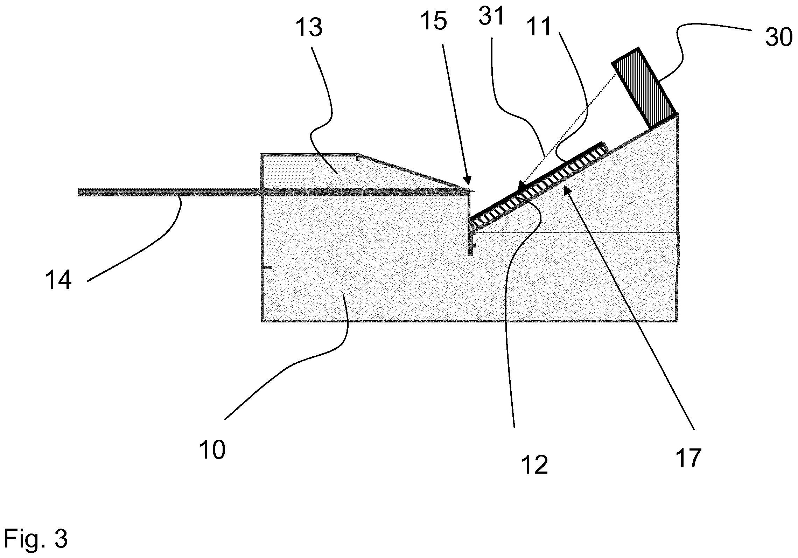

Figur 3 zeigt eine Weiterbildung der Erfindung. Die Weiterbildung umfasst zumindest einen Spiegel 30 oder eine verspiegelte Fläche, wodurch Teil der Sekundärstrahlung 31 zurück auf das Konversionsmedium 11 gelenkt werden kann. Besonders bevorzugt ist dieser Spiegel 30 derart angeordnet, dass ein Teil der reflektierten blauen Strahlung wieder zurück auf den Leuchtfleck des Konversionsmediums fallen kann, um dort in langwelligeres, gelbes Licht konvertiert zu werden. Auf diese Weise kann die Effizienz der Konvertierung des Anregungslichtes in langwelligeres Licht gesteigert werden.

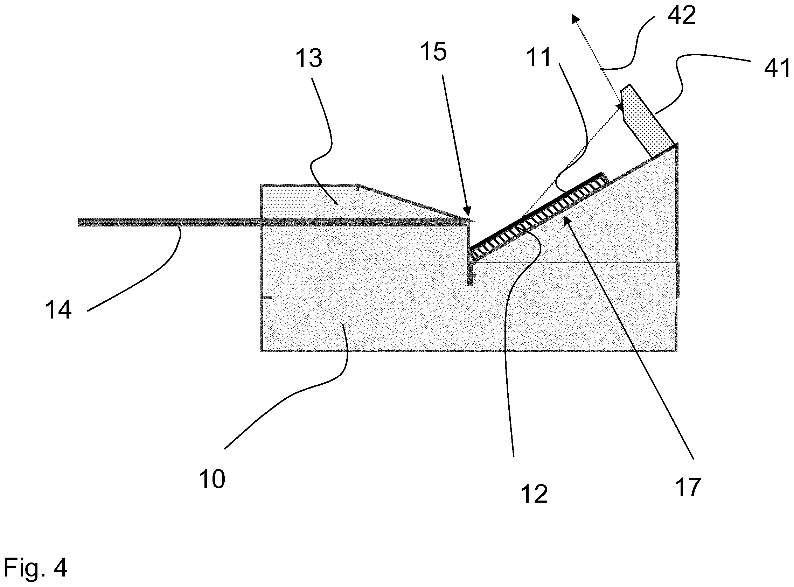

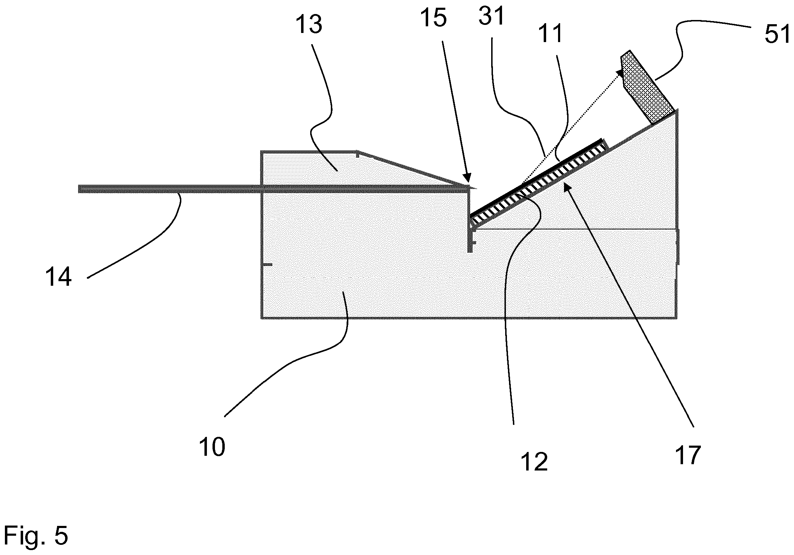

In einer nochmaligen Weiterbildung zeigt Figur 4 einen Spiegel 41, der auch eine verspiegelte Fläche umfassen kann und der dazu ausgebildet ist, einen Teil der Sekundärstrahlung 41 auf einen genau bestimmten Bereich in Beleuchtungsrichtung oder in eine genau bestimmte Zone (nicht dargestellt) zu lenken. Dieser Bereich kann beispielsweise eine bestimmte Fläche in einem Reflektor (nicht dargestellt) betreffen. Besonders bevorzugt ist dieser Spiegel 41 derart angeordnet, dass ein Teil der reflektierten blauen Strahlung durch den Spiegel an einen bestimmten Ort in Beleuchtungsrichtung gelenkt werden kann. Eine nochmals weitere Weiterbildung zeigt Figur 5. Die Trägervorrichtung 10 umfasst einen Absorber 51 oder eine absorbierende Fläche, welche einen Teil der Sekundärstrahlung 51 absorbiert. Auf diese Weise kann am Konversionsmedium 11 reflektiertes Licht aus dem Strahlengang der Sekundärstrahlung 51 entfernt werden. Auf diese Weise kann auch besonders einfach Sekundärstrahlung bei einem Verlust des Konversionsmediums absorbiert werden, ohne unkontrolliert in die Umgebung zu gelangen. Sehr vorteilhaft kann dieser Effekt zur Erhöhung der Sicherheit gegen unkontrolliert emittierte Laserstrahlung genutzt werden, wenn die Lichtquelle eine Laserlichtquelle umfasst.

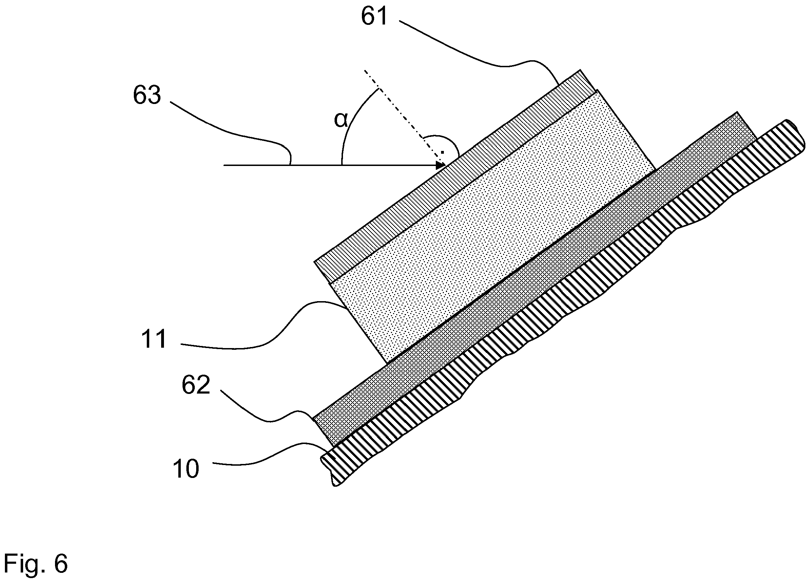

In Figur 6 ist eine schematische Sicht auf ein schräg zum Anregungslicht angeordnetes Konversionsmedium im Querschnitt dargestellt. Das Anregungslicht verläuft entlang eines optischen Pfades 63 und trifft schräg auf die Oberfläche des Konversionsmediums 11 in einem Winkel $\alpha$ auf. Die Trägervorrichtung 16 ist im Bereich der Befestigung mit dem Konversionsmedium 11 mit einem breitbandig reflektierenden Spiegel 62 ausgebildet. Dies kann auch eine breitbandig reflektierende Beschichtung der Trägervorrichtung 16 sein. Das Konversionsmedium 11 weist geometrisch die Form eines Plättchens mit begrenzenden Flächen auf. Dabei ist zumindest die dem Anregungslicht zugewandte Fläche besonders günstig mit einer als Bandstopfilter wirkenden Schicht 61 ausgebildet, die den Grünanteil im konvertierten gelben Licht reflektiert und den gelb-roten Lichtanteil durchlässt, so dass die konvertierte Strahlung in einem Wellenlängenbereich von etwa 480 nm bis 510 nm gefiltert wird. Der reflektierte oder zurückgestreute blaue Spektralanteil und der konvertierte, gefilterte gelbe Spektralanteil können in ihrer Mischung weißes Beleuchtungslicht ergeben.

Die Schicht 61 kann zusätzlich auch mit einem AR-Coating ausgebildet sein, um eine Reflektion von Anregungslicht und/oder konvertierten Licht zu reduzieren und auf diese Weise die Effizienz der Konvertierung zu verbessern.

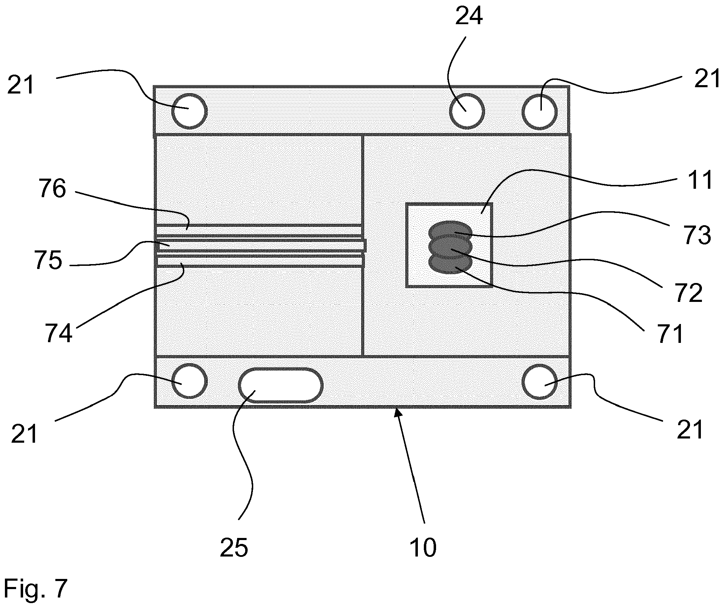

In Figur 7 ist eine weitere Ausführungsform, umfassend eine Anregungslichtquelle mit mehreren, parallel angeordneten optischen Lichtleitern, dargestellt. Der auf dem Konversionsmedium 11 ausgebildete Leuchtfleck kann daher mehrere einzelne Leuchtflecke 71, 72, 73 umfassen, die jeweils einem optischen Lichtleiter 74, 75 und 76 zugeordnet werden können. Die einzelnen Leuchtflecke 71, 72, 73 können dabei überlappend oder räumlich separiert angeordnet sein.

Durch unabhängiges Schalten der den einzelnen Lichtleitern 74, 75 und 76 zugeordneten Anregungslichtquellen (nicht dargestellt) können die Leuchtflecke einzeln aktiv geschaltet werden, so dass die Leuchtdichtenverteilung auf dem Konversionsmedium 11 variiert werden kann.

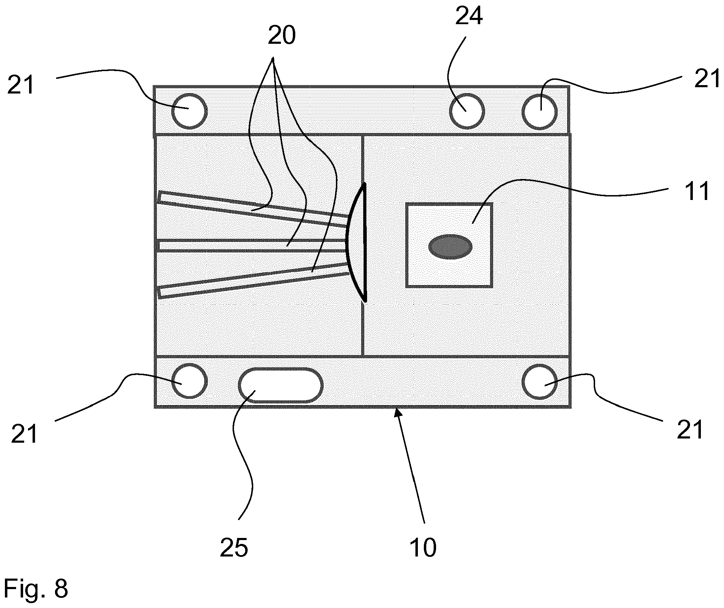

Figur 8 zeigt eine nochmals weitere Ausführungsform, bei der mehrere optische Lichtleiter auf der Trägervorrichtung 10 angeordnet sind und wobei der Abstand des Emissionsortes eines jeden optischen Lichtleiters von dem auf dem Konversionsmedium erzeugten Leuchtfleck gleich groß ist. Dies wird erreicht durch eine kreisförmige Anordnung um das Zentrum des Leuchtflecks.

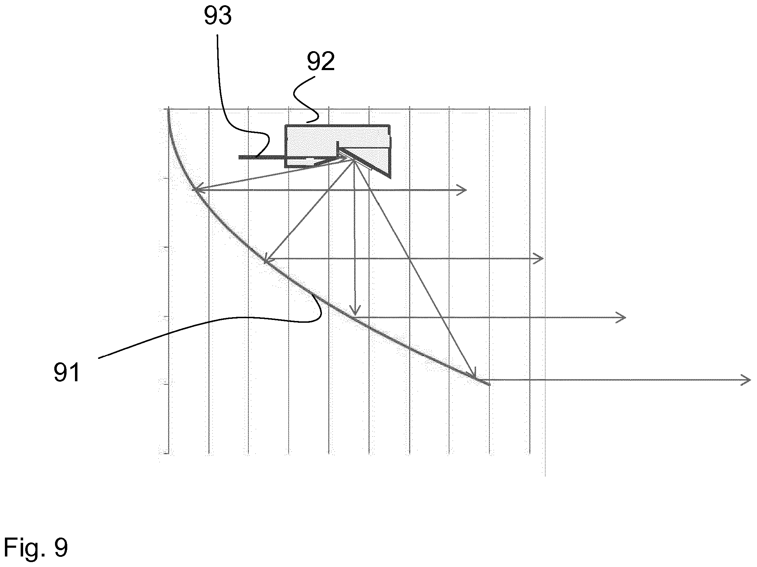

In Figur 9 ist eine mögliche Anordnung einer erfindungsgemäßen Beleuchtungseinrichtung 92 in einem Reflektor 91, der als parabolischer Halb-Hohlspiegel ausgebildet ist, In besonders bevorzugter Weise kann bei einer derartigen Anordnung ein optischer Lichtleiter 93 ohne Biegung aus dem Reflektor herausgeführt werden.

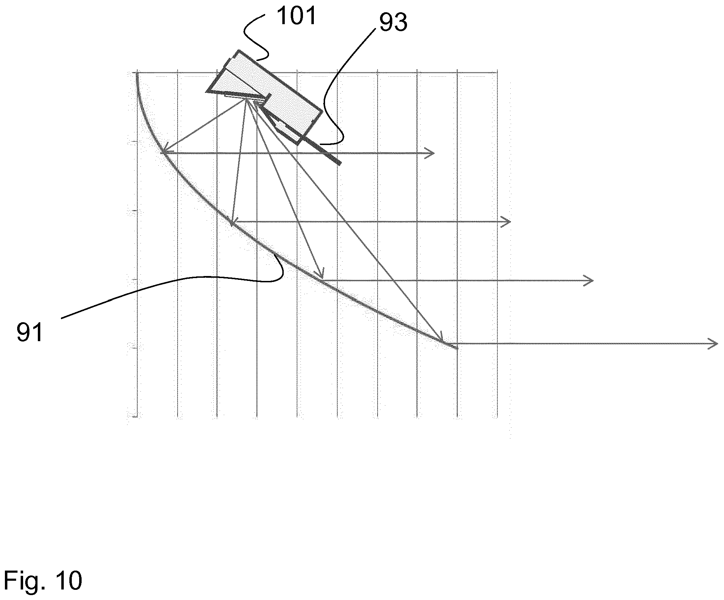

In Figur 10 ist eine nochmals weitere Ausführungsform dargestellt, bei der eine Beleuchtungseinrichtung 101 schräg in einem Reflektor 91 angeordnet ist und bei der ein optischer Lichtleiter in Beleuchtungsrichtung liegt. In Bezug auf die Lasersicherheit kann eine derartige Anordnung sehr günstig sein bei einer Beschädigung des Konversionsmediums, da der Laserstrahl auf diese Weise in einen rückseitigen Raum des Reflektors geführt werden kann und auf diese Weise nicht unkontrolliert in die Umgebung austreten kann.

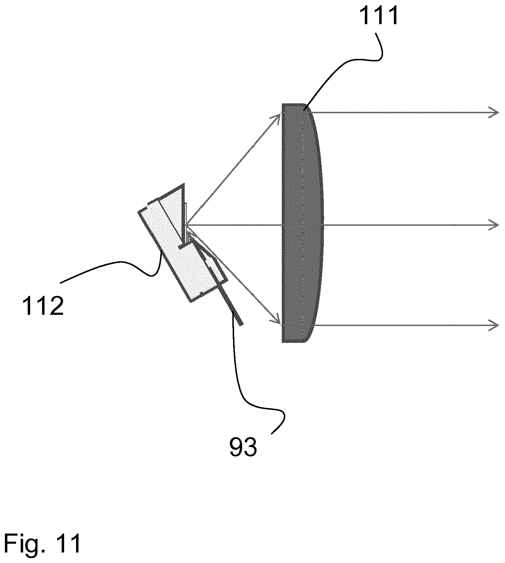

In Figur 11 ist eine Anordnung einer Beleuchtungseinrichtung 112 in einer Projektionseinrichtung schematisch dargestellt. In der Anordnung ist eine optische Linse 111, die in der Beleuchtungsrichtung der Beleuchtungseinrichtung liegt, vorgesehen zur Lenkung des erzeugten Lichtes in eine gewünschte Richtung.

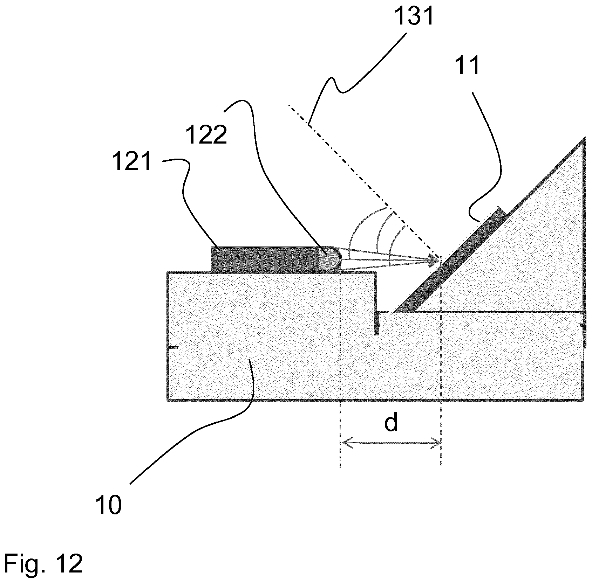

In Figur 12 ist eine Anordnung dargestellt, bei der die Anregungslichtquelle eine monochromatische Laserlichtquelle 121 umfasst, welche direkt mit der Trägervorrichtung 10 verbunden ist. Zur Fokussierung des Anregungslichtes auf das Konversionsmedium 11 ist eine optische Linse 122 vorgesehen.

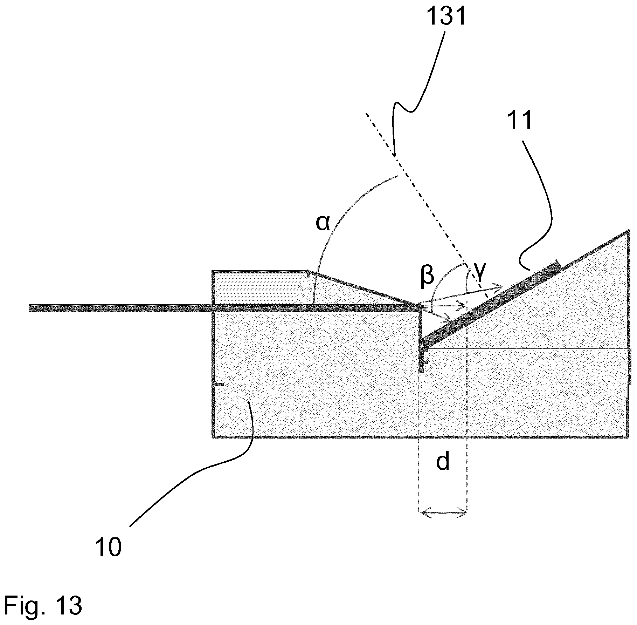

In Figur 13 ist eine weitere Anordnung einer Beleuchtungseinrichtung dargestellt, wobei ein Winkel $\alpha$ den Winkel zwischen dem optischen Pfad des Anregungslichtes und der Oberflächennormalen 131 auf der der Anregungslichtquelle zugewandten Fläche des Konversionsmediums angibt, so dass das Anregungslicht schräg auf die Oberfläche des Konversionsmediums auftrifft.

Weiterhin ist ein minimaler Abschattungswinkel $\beta$ dargestellt, der den minimalen Winkel zwischen der Oberflächennormalen 131 und demjenigen Strahl aus der Sekundärstrahlung entspricht, bei dem gerade noch eine Abschattung durch die Trägervorrichtung erfolgt.

Der maximale Einfallwinkel $\gamma$ entspricht dem größten Winkel zwischen der Oberflächennormalen 131 und einem Strahl des Anregungslichtes, der auf die Oberfläche des Konversionsmediums emittiert wird.

Für eine Beleuchtungseinrichtung mit einem optischen Lichtleiter als Anregungslichtquelle ergeben sich folgende günstige Konfigurationen bezüglich einem Durchmesser des Lichtleiters D, der NA, dem Abstand d und dem Winkel $\alpha$.

Tabelle 1: Konfiguration für optischen Lichtleiter

| NA | D/mm | d/mm | bevorzugte Winkel $\alpha$/° | besonders bevorzugte Winkel $\alpha$/° |
|---|---|---|---|---|
| 0,02 | 0,5 | 5 | 35 bis 70 | |
| 0,05 | 0,2 | 3 | 40 bis 70 | |
| 0,05 | 0,2 | 2 | 40 bis 70 | 50 bis 60 |
| 0,05 | 0,2 | 1 | 45 bis 70 | 50 bis 60 |
| 0,1 | 0,1 | 2 | 45 bis 65 | 50 bis 55 |
| 0,1 | 0,1 | 1 | 45 bis 65 | 50 bis 55 |
| 0,1 | 0,1 | 0,5 | 45 bis 65 | nur 55 |
| 0,2 | 0,05 | 0,5 | 50 bis 60 | |
| 0,2 | 0,05 | 0,3 | 55 bis 60 | |
| 0,3 | 0,033 | 0,3 | nur 55 | |

Hiernach ist beispielsweise eine besonders günstige Konfiguration bei D = 0,1 mm, NA = 0,1, d = 1 mm und $\alpha$ = 45° bis 65°, wobei $\alpha$ besonders günstig zwischen 50° und 55° liegt. Im bevorzugten Bereich für den Winkel $\alpha$ liegt der Anteil des abgeschatteten Lichts unter 20%, der maximale Einfallwinkel unter 75° und die Größe des ovalen Leuchtflecks ist kleiner als ca. 1 mm x 1,5 mm. Im besonders bevorzugten Bereich für den Winkel $\alpha$ liegt der Anteil des abgeschatteten Lichts unter 10%, der maximale Einfallwinkel unter 65° und die Größe des ovalen Leuchtflecks ist kleiner als ca. 0,6 mm x 0,9 mm.

Für eine Beleuchtungseinrichtung, bei der die Anregungslichtquelle eine monochromatische Laserlichtquelle umfasst, welche direkt mit der Trägervorrichtung verbunden ist, ergeben sich folgende günstige Konfigurationen: Ein günstiger Abstand d ergibt sich aus dem Durchmesser der optischen Linse und der NA, so dass der Fokus im Bereich des Konversionsmediums liegt, wobei der Durchmesser der Linse vorzugsweise der Größe der Laserlichtquelle entspricht. Bei einer Größe der Laserlichtquelle von beispielsweise 2 mm kann vorzugsweise eine ebenso große Linse ausgewählt werden. In diesem Fall ergibt sich bei einer NA von 0,1 ein besonders günstiger Abstand d von etwa 10 mm.

Tabelle 2: Konfiguration für Laserlichtquelle mit Linse

| NA | bevorzugte Winkel $\alpha$/° | besonders bevorzugte Winkel $\alpha$/° |
|---|---|---|
| 0,05 | 35 bis 70 | 35 bis 65 |
| 0,1 | 40 bis 65 | 45 bis 60 |
| 0,2 | 45 bis 60 | 50 bis 55 |
| 0,3 | 50 bis 55 | nur 55 |

Bei einer NA von 0,1 liegt dabei beispielsweise ein Winkel $\alpha$ in einem bevorzugten Bereich von 40° bis 65° und ganz besonders bevorzugt in einem Bereich von 45° bis 60°.

Im bevorzugten Bereich für den Winkel $\alpha$ liegt der Anteil des abgeschatteten Lichts unter 20%, der maximale Einfallwinkel unter 75°. Im besonders bevorzugten Bereich für den Winkel $\alpha$ liegt der Anteil des abgeschatteten Lichts unter 10%, der maximale Einfallwinkel unter 65.

Figur 14 zeigt das Schema einer erfindungsgemäßen Beleuchtungseinrichtung. Das optische Element 8 steht stellvertretend für alle einsetzbaren optischen Elemente, z.B. auch eine konvexe Linse. Wie zu sehen ist, ist die Sekundärlichtquelle 2 bevorzugt verkippt zu der Einstrahlachse des vom der Primärlichtquelle 1 emittierten Lichts angeordnet.

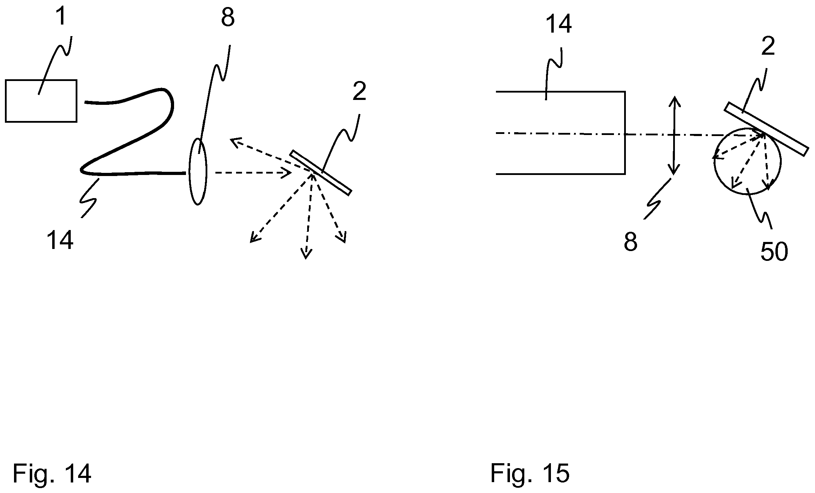

Figur 15 zeigt eine Vergrößerung des Ausschnitts der Austrittsfläche des Lichtleiters 14. Das optische Element 8 leitet das Licht auf einen Bereich der Sekundärlichtquelle 2. Ist diese ein Konverter erscheint ein Leuchtfleck auf dem Konverter. Die Sekundärlichtquelle 2 emittiert das Licht 50 in alle Raumrichtungen, wobei es vorzugsweise spektral verschoben zu dem Licht der Primärlichtquelle 1 ist. Durch zumindest teilweise Reflexion und Remission an der Sekundärlichtquelle 2 kann das emittierte und bevorzugt spektral verschobene Licht mit dem spektral unverschobenen Licht der Primärlichtquelle 1 mischen. Auf diese Weise lässt sich aus einer z.B. blauen Laserdiode als Primärlichtquelle weißes Licht durch die Beleuchtungseinrichtung generieren. Alternativ kann bei kompletter Remission in der Sekundärlichtquelle 2 weißes Licht erzeugt werden, wenn die dort verwendeten Konversionsmaterialien schon weiß remittieren.

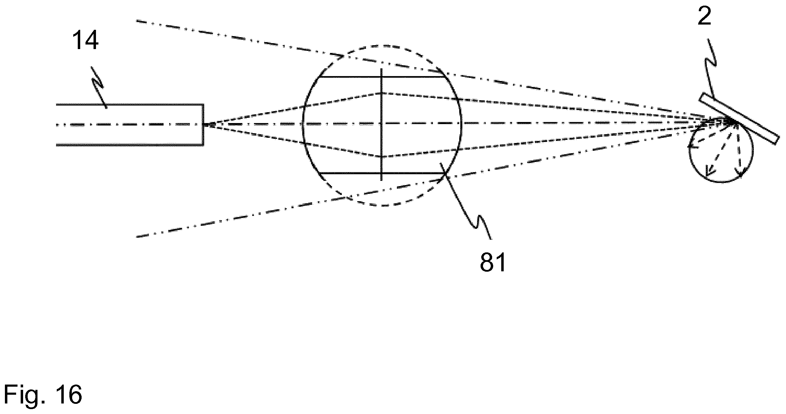

Figur 16 zeigt den exemplarischen Strahlengang einer Stablinse 81 als optischem Element. Das auf die Stablinse 81 treffende reflektierte und/oder remittierte Licht ist ebenfalls als Randstrahl eingezeichnet. Dieses bestimmt die Abschattung durch das optische Element.

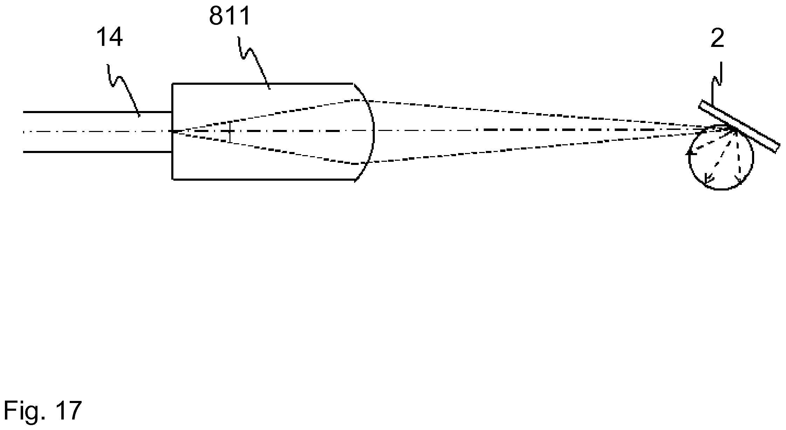

Figur 17 stellt eine plankonvexe Stablinse 811 als optisches Element 8 dar.

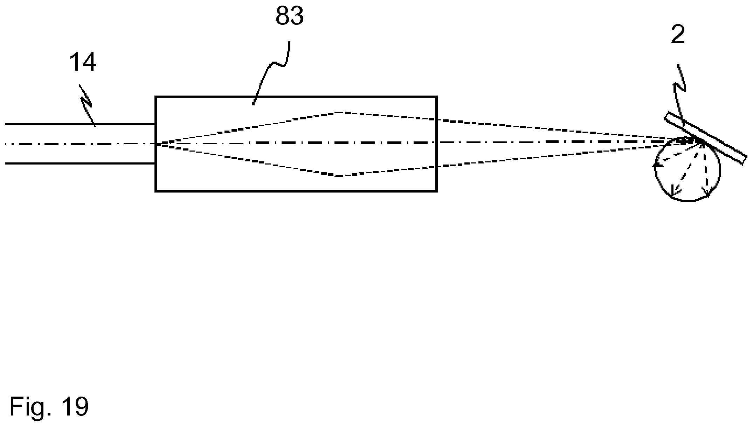

Figur 18 zeigt eine GRIN-Linse mit Spacer 82 als optisches Element 8, Figur 19 eine GRIN-Linse ohne Spacer 83 als optisches Element 8.

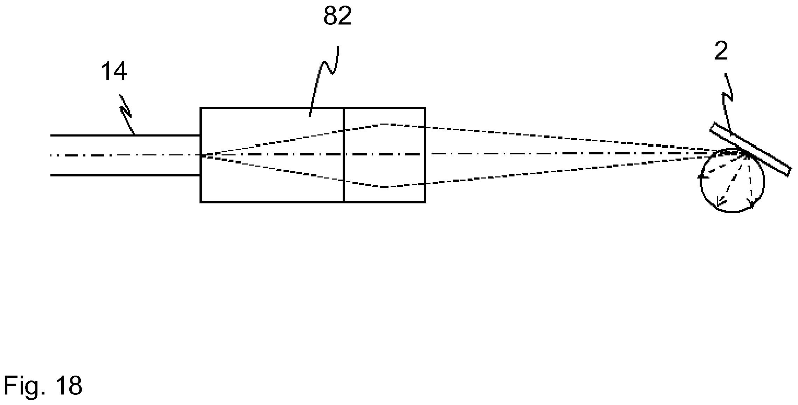

Beispielsweise kann eine Beleuchtungseinrichtung mit Spacer und GRIN-Linse 82 als optischem Element 8 entsprechend Figur 18 aufgebaut sein. Der Lichtleiter 14 kann ein Standardlichtleiter aus einer Stufenindexfaser mit einem Kerndurchmesser von 180 $\mu$m und einer NA von 0,22 sein. Werte bis 240 $\mu$m für den Kerndurchmesser und 0,18 für NA sind ebenso standardmäßig möglich. Das von der Primärlichtquelle 1 emittierte Licht kann in dem Beispiel die Wellenlänge 450 nm aufweisen. Die Kohärenzlänge ist unerheblich. Der Lichtleiter 14 ist nach den gängigen Verfahren mit dem Spacer der GRIN-Linse 82 verkittet. Der Spacer hat beispielsweise eine Länge von 2,7 mm und einen Durchmesser von 1 mm, die GRIN-Linse einen Durchmesser von 1 mm und eine Länge von 1,04 mm. Andere Werte insbes. angesichts der Werte des Lichtleiters 14 sind ebenso möglich. Der Abstand zwischen Austrittsfläche der GRIN-Linse und der angestrahlten Oberfläche der Sekundärlichtquelle 2 beträgt ist in dem Beispiel 4,2 mm und ist insbes. ein Freistrahlbereich. Auf diese Weise wird ein Spot-Durchmesser auf der angestrahlten Oberfläche der Sekundärlichtquelle von 429 $\mu$m erreicht und eine NA von 0,094.

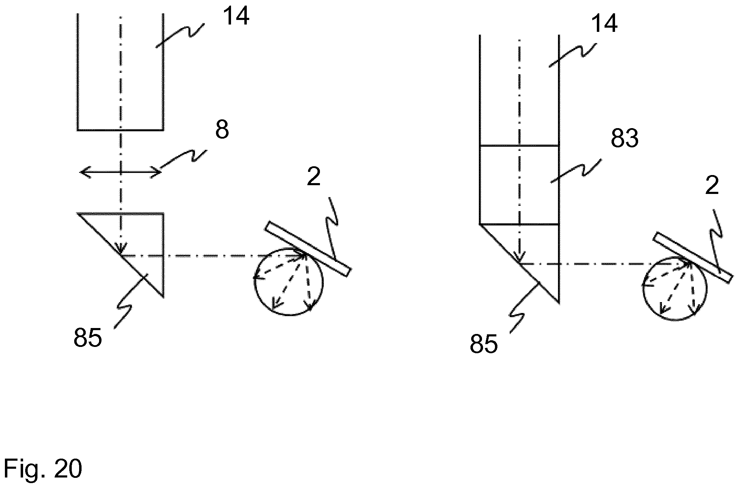

Figur 20 zeigt mögliche Beleuchtungseinrichtungen, bei der das aus dem Lichtleiter 14 tretende Licht noch einmal umgelenkt wird. Diese Anordnung kann für manche Scheinwerferanwendungen besonders vorteilhaft sein. Dazu ist eine Umlenkeinrichtung 85 zwischen Austrittsfläche des Lichtleiters 14 und der Sekundärlichtquelle 2 vorhanden. Ein geeignetes optisches Element 8 kann bevorzugt zwischen der Austrittsfläche des Lichtleiters 14 und der Umlenkeinrichtung 85 in den Strahlengang eingebracht sein.

Für diese Anordnung ist eine GRIN-Linse ohne Spacer 83 besonders vorteilhaft einsetzbar, wie im rechten Teil der Figur 20 dargestellt.

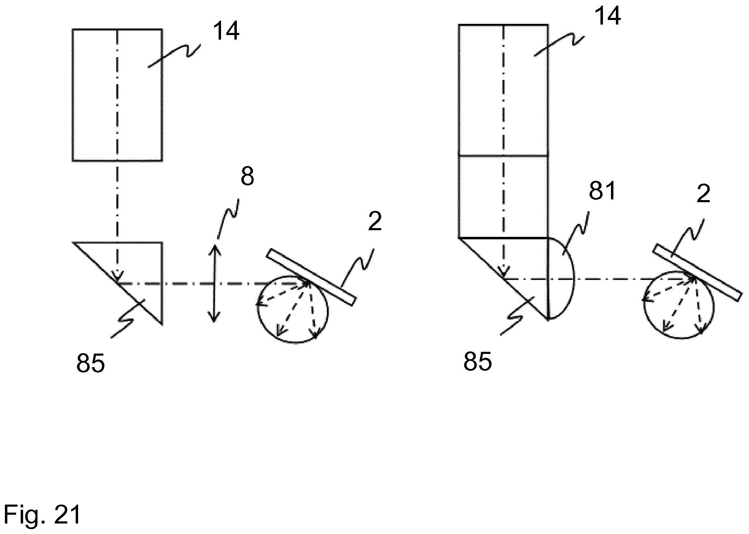

Figur 21 entspricht weitestgehend der Figur 20, nur dass das optische Element 8 zwischen Umlenkeinrichtung 85 und der Sekundärlichtquelle 2 angebracht ist. Als optisches Element 8 sind alle geeigneten optischen Elemente einsetzbar, besonders vorteilhaft haben sich jedoch plankonvexe Stablinsen (81) erwiesen. Ebenso ist es möglich, die Konzepte der Figuren 20 und 21 zu kombinieren, d.h. optische Elemente 8 sowohl zwischen der Austrittsfläche des Lichtleiters 14 und der Umlenkeinrichtung 85 als auch zwischen der Umlenkeinrichtung 85 und der Sekundärlichtquelle 2 vorzusehen.

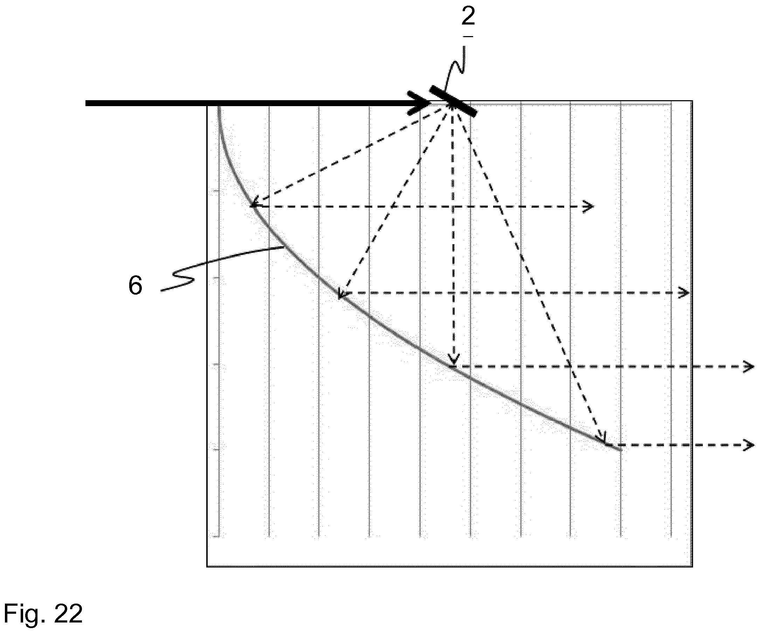

Figur 22 stellt schematisch eine erfindungsgemäße Beleuchtungseinrichtung eines Scheinwerfers dar. Das Licht der Primärlichtquelle 1 wird durch die beschriebenen Maßnahmen auf die Sekundärlichtquelle 2 geleitet und von dieser auf den Reflektor 6 reflektiert und/oder remittiert. Der Reflektor 6 parallelisiert bevorzugt das von der Sekundärlichtquelle 2 stammende Licht. Der Reflektor 6 kann insbesondere ein parabolischer Reflektor sein, insbesondere ein asymmetrischer parabolischer Reflektor.

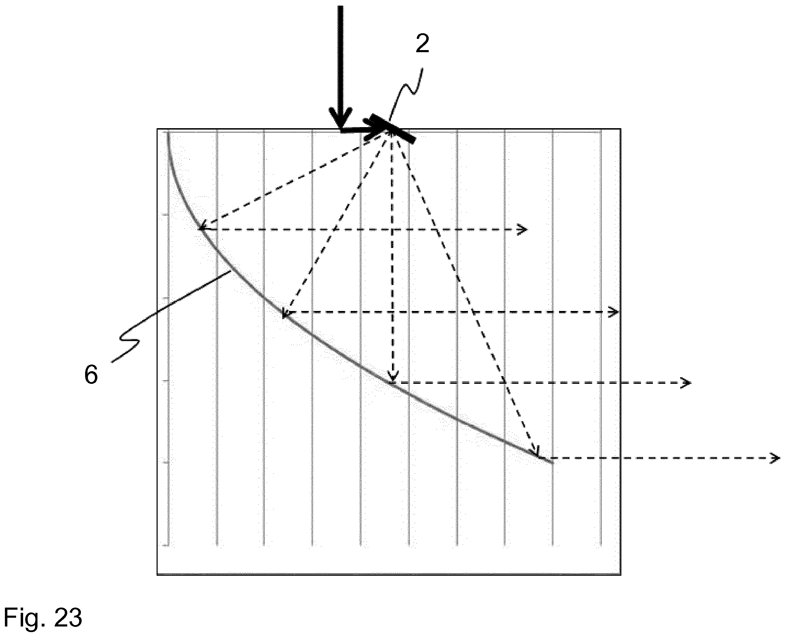

Figur 23 zeigt die Anordnung in einem Scheinwerfer mit Reflektor 6 ähnlich wie Figur 22, nur dass Umlenkeinrichtungen 85 wie prinzipiell in Figuren 20 und 21 dargelegt vorhanden sind. Auf diese Weise kann die Faserzuführung zu dem Scheinwerfer insbes. von oben erfolgen.

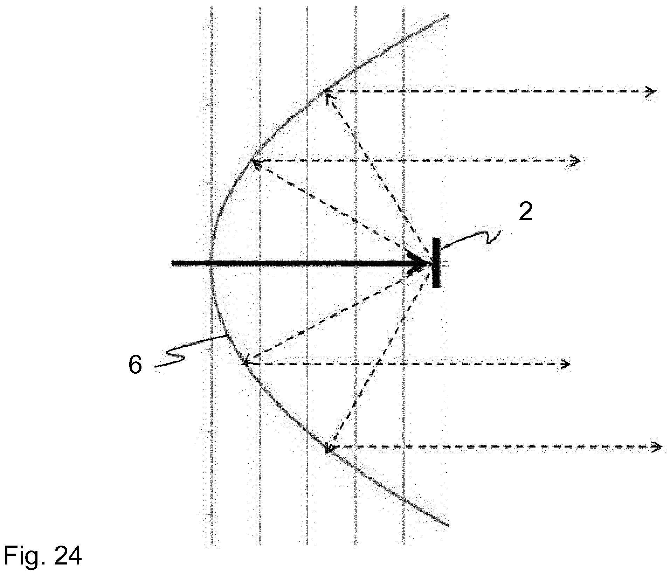

Figur 24 zeigt einen Scheinwerfer mit einem symmetrischen Reflektor 6, der parabolisch ausgeführt sein kann. Bei diesem Beispiel wird die Abschattung durch das optische Element 8 größer als in den anderen Scheinwerfern sein, allerdings kann diese Ausführungsform andere konstruktive Vorteile bieten, insbes. was dem Anschluss an die Primärlichtquelle 1 und deren Kühlung betrifft.

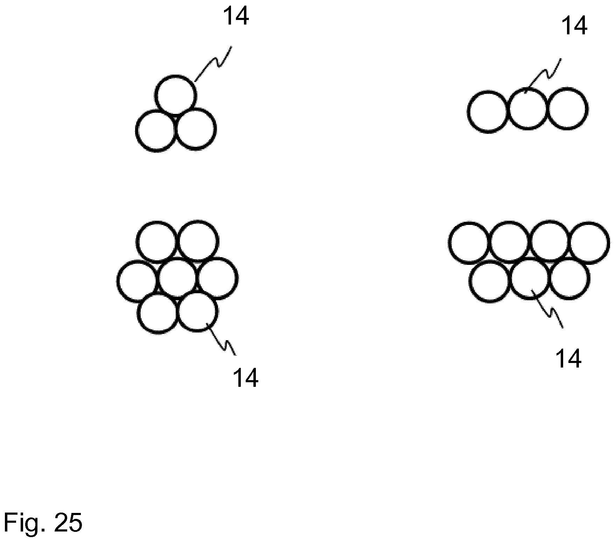

Figur 25 stellt schematisch einige exemplarische Faserbündelquerschnitte dar.

Der Vorteil der Erfindung gegenüber dem Stand der Technik beruht darin, dass durch die Verwendung der beschriebenen optischen Elemente nahezu beliebige Lichtleiter eingesetzt werden können, die das Strahlparameterprodukt des Anregungslichts zwischen Faserendfläche und Konverter stark verschlechtern. Die erfindungsgemäße optische Einrichtung korrigiert das verschlechterte Strahlparameterprodukt, so dass eine optimale Abstimmung der Lichtleiter auf die Primärlichtquelle erfolgen kann, ohne dass die Effizienz des Gesamtsystems durch eine zu große Abschattung durch die optische Einrichtung zu stark vermindert würde.

Es ist dem Fachmann ersichtlich, dass die Erfindung nicht auf die vorstehend anhand der Figuren beschriebenen lediglich beispielhaften Ausführungsformen beschränkt ist, sondern in vielfältiger Weise im Rahmen des Gegenstandes der Patentansprüche variiert werden kann. Insbesondere können auch die Merkmale einzelner Ausführungsbeispiele miteinander kombiniert werden.

Bezugszeichenliste

| | |
|---|---|
| 1 | Primärlichtquelle |
| 2 | Sekundärlichtquelle |
| 6 | Reflektor |
| 10 | Trägervorrichtung |
| 11 | Konversionsmedium |
| 12 | Verspiegelung |
| 13 | Niederhalter |
| 14 | Lichtleiter |
| 15 | Ende eines Lichtleiters |
| 17 | Kontaktfläche |
| 18 | Anregungslichtquelle |
| 20 | Nut |
| 21 | Bohrung |
| 22 | Leuchtfleck |
| 24 | Bohrung für Paßstift |
| 25 | Langloch |
| 30 | Spiegel |
| 31 | Sekundärstrahlung |
| 41 | Spiegel |
| 50 | Emissionsprofil der Sekundärlichtquelle |
| 51 | Absorber |
| 61 | Bandstopfilter |
| 62 | breitbandig reflektierender Spiegel |
| 63 | optischer Pfad |

| | |
|---|---|
| 71, 72, 73 | Leuchtfleck |
| 74, 75, 76 | Lichtleiter |
| 8 | Optisches Element |
| 81 | Stablinse |
| 811 | Plankonvexe Stablinse |
| 82 | GRIN-Linse mit Spacer |
| 83 | GRIN-Linse ohne Spacer |
| 85 | Umlenkeinrichtung, z.B. Prisma und/oder Spiegel |
| 91 | Reflektor |
| 92 | Beleuchtungseinrichtung |
| 93 | optischer Lichtleiter |
| 101 | schräg angeordnete Beleuchtungseinrichtung |
| 111 | Linse |
| 112 | Beleuchtungseinrichtung in einem Projektor |
| 121 | Laserlichtquelle |
| 122 | Linse |
| 131 | Oberflächennormale |

**Patentansprüche**

1. Beleuchtungseinrichtung zur Erzeugung von konvertiertem Licht mit hoher Leuchtdichte, insbesondere von Weißlicht, umfassend

   - eine Anregungslichtquelle oder Primärlichtquelle zur Abgabe von blauem Anregungslicht,
   - ein Konversionsmedium oder eine Sekundärlichtquelle zur Konvertierung des Anregungslichtes in langwelligeres Licht, wobei dass vom Konversionsmedium remittierte Licht vorzugsweise weiß erscheint,
   - eine Trägervorrichtung zur Ausrichtung des Anregungslichtes schräg auf einen mittleren Bereich der Oberfläche des Konversionsmediums derart, dass der Großteil des Anregungslichtes in das Konversionsmedium eindringt, wobei der Bereich der Oberfläche des Konversionsmediums, der direkt im Strahlengang des Anregungslichtes liegt, als Leuchtfleck bezeichnet wird, um nach Konversion im Wesentlichen ohne Auftreffen auf die Trägervorrichtung in Beleuchtungsrichtung emittiert zu werden, wobei das Konversionsmedium einen ersten Anteil der Strahlung in einen gelben Spektralbereich konvertiert und einen zweiten Anteil der Strahlung in einen blauen Anteil zurückstreut oder reflektiert, und wobei der Leuchtfleck eine Fläche umfasst, die kleiner als 1 mm x 1,5 mm, besonders bevorzugt kleiner als 0,6 mm x 0,9 mm in ihrer Ausdehnung ist.

2. Beleuchtungseinrichtung gemäß dem vorstehenden Anspruch, wobei die Anregungslichtquelle zumindest eine monochromatische Lichtquelle oder Laserdiode umfasst, bevorzugt eine blaue Laserdiode.

3. Beleuchtungseinrichtung gemäß vorstehendem Anspruch, ferner umfassend zumindest einen optischen Lichtleiter sowie ein optisches Element, wobei im Betriebszustand die zumindest eine Primärlichtquelle Licht in die Eintrittsfläche des zumindest einen Lichtleiters emittiert, der Lichtleiter das Licht zu seiner Austrittsfläche transportiert, das aus der Austrittsfläche des Lichtleiters austretende Licht durch das zumindest eine optische Element auf zumindest einen Bereich einer Sekundärlichtquelle gelenkt wird und die Sekundärlichtquelle das auf sie gelenkte Licht zumindest anteilsweise in Richtung des optischen Elements zurück reflektiert und/oder remittiert und ein Teil des reflektierten und/oder emittierten Lichts das optische Element trifft.

4. Beleuchtungseinrichtung nach einem der vorstehenden Ansprüche, wobei der Anteil des im Betriebszustand auf das optische Element treffenden konvertierten Lichts ein nur kleiner Anteil des von der Primärlichtquelle emittierten Lichts ist.

5. Beleuchtungseinrichtung nach einem der vorherigen Ansprüche, wobei das optische Element im Betriebszustand das von der Primärlichtquelle emittierte und aus dem Lichtleiter austretende Licht auf zumindest einen Bereich der Sekundärlichtquelle fokussiert, und wobei der Leuchtfleck eine Fläche umfasst, die bevorzugt kleiner als 1 mm x 1,5 mm, besonders bevorzugt kleiner als 0,6 mm x 0,9 mm ist.

6. Beleuchtungseinrichtung nach zumindest einem der vorherigen Ansprüche, wobei das optische Element ausgewählt ist aus der Gruppe Kugellinse und/oder Stablinse und/oder GRIN-Linse ohne Spacer und/oder GRIN-Linse mit Spacer und/oder plankonvexe Stablinse.

7.  Beleuchtungseinrichtung nach zumindest einem der vorherigen Ansprüche, wobei der zumindest eine Lichtleiter aus Glas oder Quarz als Hauptbestandteil besteht.

8.  Beleuchtungseinrichtung gemäß einem der vorstehenden Ansprüche, **dadurch gekennzeichnet, dass** das Konversionsmedium ein niedrig dotiertes Ce:YAG Phosphor-Material umfasst.

9.  Beleuchtungseinrichtung gemäß einem der vorstehenden Ansprüche, **dadurch gekennzeichnet, dass** das Konversionsmedium ein niedrig dotiertes, optokeramisches Material aus Ce:YAG mit einer Wärmeleitfähigkeit von mindestens 5 W/ (m*K) umfasst.

10. Beleuchtungseinrichtung gemäß einem der vorstehenden Ansprüche, **dadurch gekennzeichnet, dass** die Anregungslichtquelle und das Konversionsmedium auf einer gemeinsamen Trägervorrichtung angeordnet sind und die Trägervorrichtung zumindest im Bereich des Konversionsmediums und/oder die Halterung zum Befestigen des Konversionsmediums zur Wärmeableitung und/oder als Wärmesenke ausgebildet ist.

11. Beleuchtungseinrichtung gemäß einem der vorstehenden Ansprüche, **dadurch gekennzeichnet, dass** das Konversionsmedium schräg in einem Winkel $\alpha$ zum optischen Pfad des Anregungslichtes angeordnet ist.

12. Beleuchtungseinrichtung nach zumindest einem der vorherigen Ansprüche, wobei das im Betriebszustand von der Sekundärlichtquelle reflektierte und/oder remittierte Licht auf einen Reflektor trifft, insbesondere einen parabolischen Reflektor.

13. Verwendung einer Beleuchtungseinrichtung nach zumindest einem der Ansprüche 1 bis 12 in einem Projektor oder Scheinwerfer, insbesondere einem Automobilscheinwerfer oder dem Scheinwerfer eines Luftfahrzeugs oder eines Schienenverkehrsmittels oder eines Schiffes.

14. Scheinwerfer, insbesondere Scheinwerfer für Fahrzeuge, umfassend eine Beleuchtungseinrichtung nach einem der vorstehenden Ansprüche, wobei das Konversionsmedium, insbesondere der Leuchtfleck des Konversionsmediums, im Arbeitspunkt des Scheinwerfers angeordnet ist.

**Claims**

1.  A lighting device for generating converted light of high luminance, in particular white light, comprising:

    - an excitation light source or primary light source for emitting blue excitation light;
    - a conversion medium or a secondary light source for converting the excitation light into light of longer wavelengths, wherein the light remitted from the conversion medium preferably appears white;
    - a supporting device for aligning the excitation light at an oblique angle to a central surface area of the conversion medium such that a major part of the excitation light enters the conversion medium, the surface area of the conversion medium directly located in the path of the excitation light being referred to as a light spot, to be emitted in the direction of illumination after conversion, substantially without being incident on the supporting device; wherein the conversion medium converts a first fraction of the radiation into a yellow spectral range and backscatters or reflects a second fraction of the radiation as a blue fraction, and wherein the light spot encompasses a surface area having a dimension of less than 1 mm x 1.5 mm, most preferably less than 0.6 mm x 0.9 mm,

2.  The lighting device according to the preceding claim, wherein the excitation light source comprises at least one monochromatic light source or laser diode, preferably a blue laser diode.

3.  The lighting device according to the preceding claim, further comprising at least one optical light guide and an optical element, wherein, during operation, the at least one primary light source emits light into the entrance face of the at least one light guide, the light guide conveys the light to its exit face, the light exiting from the exit face of the light guide is directed onto at least a portion of a secondary light source by the at least one optical element, and the secondary light source reflects back and/or remits at least part of the light directed thereto towards the optical element, and a portion of the reflected and/or remitted light is incident on the optical element.

4. The lighting device according to any one of the preceding claims, wherein the fraction of the converted light incident on the optical element during operation is only a small fraction of the light emitted by the primary light source,

5. The lighting device according to any one of the preceding claims, wherein, during operation, the optical element focuses the light emitted by the primary light source and exiting from the light guide onto at least a portion of the secondary light source, and wherein the light spot encompasses a surface area that is preferably less than 1 mm x 1,5 mm, most preferably less than 0.6 mm x 0.9 mm.

6. The lighting device according to at least one of the preceding claims, wherein the optical element is selected from the group of spherical lens and/or rod lens and/or GRIN lens without spacer and/or GRIN lens with spacer and/or plano-convex rod lens.

7. The lighting device according to at least one of the preceding claims, wherein the at least one light guide is made of glass or fused silica as a main component.

8. The lighting device according to any one of the preceding claims, **characterised in that** the conversion medium comprises a low-doped Ce:YAG phosphor material.

9. The lighting device according to any one of the preceding claims, **characterised in that** the conversion medium comprises a low-doped opto-ceramic material made of Ce:YAG with a thermal conductivity of at least 5 W/(m*K).

10. The lighting device according to any one of the preceding claims, **characterised in that** the excitation light source and the conversion medium are disposed on a common supporting device, and wherein at least the area of the conversion medium of the supporting device and/or the holder for securing the conversion medium is adapted for heat dissipation and/or is configured as a heat sink.

11. The lighting device according to any one of the preceding claims, **characterised in that** the conversion medium is arranged obliquely, at an angle $\alpha$, relative to the optical path of the excitation light.

12. The lighting device according to at least one of the preceding claims, wherein, during operation, the light reflected and/or remitted by the secondary light source is incident on a reflector, in particular a parabolic reflector.

13. Use of a lighting device according to at least one of claims 1 to 12 in a projector or in a headlight, in particular an automobile headlight or in the headlight of an aircraft or a railroad vehicle or a vessel.

14. A headlight, in particular a headlight for vehicles, comprising a lighting device according to any one of the preceding claims, wherein the conversion medium, in particular the light spot of the conversion medium, is arranged in the operating point of the headlight.

**Revendications**

1. Dispositif d'éclairage pour produire de la lumière convertie à luminance élevée, en particulier de la lumière blanche, comprenant

   - une source lumineuse d'excitation ou source lumineuse primaire pour l'émission de lumière d'excitation bleue,
   - un milieu de conversion ou une source lumineuse secondaire pour la conversion de la lumière d'excitation en une lumière de plus grande longueur d'onde, la lumière réémise par le milieu de conversion parais sant de préférence blanche,
   - un dispositif de support destiné à orienter la lumière d'excitation en biais sur une zone médiane de la surface du milieu de conversion, de telle sorte que la majeure partie de la lumière d'excitation pénètre dans le milieu de conversion, la zone de la surface du milieu de conversion qui se situe directement sur le trajet des rayons de la lumière d'excitation étant désignée comme point lumineux, aux fins d'être émise, après conversion, dans la direction d'éclairage, sensiblement sans frapper le dispositif de support, le milieu de conversion convertissant une première fraction du rayonnement en un domaine spectral jaune et rétro-diffusant ou réfléchissant une deuxième fraction du rayonnement dans une fraction bleue, et le point lumineux comprenant une surface qui est plus petite que 1 mm x 1,5 mm et est de manière particulièrement avantageuse plus petite que 0,6 mm x 0,9 mm dans ses dimensions.

**2.** Dispositif d'éclairage selon la revendication précédente, dans lequel la source lumineuse d'excitation comprend au moins une source lumineuse monochromatique ou diode laser, de préférence une diode laser bleue.

**3.** Dispositif d'éclairage selon la revendication précédente, comprenant en outre au moins un guide d'ondes optiques ainsi qu'un élément optique, sachant qu'à l'état de fonctionnement, la source lumineuse primaire, au nombre d'au moins une, émet de la lumière dans la surface d'entrée du guide d'ondes optiques, au nombre d'au moins un, le guide d'ondes optiques transporte la lumière jusqu'à sa surface de sortie, la lumière quittant la surface de sortie du guide d'ondes optiques est dirigée par l'élément optique, au nombre d'au moins un, sur au moins une partie d'une source lumineuse secondaire, et la source lumineuse secondaire réfléchit et/ou réémet la lumière dirigée sur elle, au moins par fractions de nouveau en direction de l'élément optique, et une partie de la lumière réfléchie ou réémise tombe sur l'élément optique.

**4.** Dispositif d'éclairage selon l'une des revendications précédentes, dans lequel la fraction de la lumière convertie qui tombe sur l'élément optique à l'état de fonctionnement ne représente qu'une petite fraction de la lumière émise par la source lumineuse primaire.

**5.** Dispositif d'éclairage selon l'une des revendications précédentes, dans lequel, à l'état de fonctionnement, l'élément optique focalise la lumière émise par la source lumineuse primaire et sortant du guide d'ondes optiques sur au moins une partie de la source lumineuse secondaire, et dans lequel le point lumineux comprend une surface qui est de préférence plus petite que 1 mm x 1,5 mm et est de manière particulièrement avantageuse plus petite que 0,6 mm x 0,9 mm.

**6.** Dispositif d'éclairage selon au moins une des revendications précédentes, dans lequel l'élément optique est choisi dans le groupe comprenant une lentille sphérique et/ou une lentille barreau et/ou une lentille GRIN sans espaceur et/ou une lentille GRIN avec espaceur et/ou une lentille barreau plan-convexe.

**7.** Dispositif d'éclairage selon au moins une des revendications précédentes, dans lequel le guide d'ondes optiques, au nombre d'au moins un, est constitué de verre ou de quartz en tant que composant principal.

**8.** Dispositif d'éclairage selon l'une des revendications précédentes, **caractérisé en ce que** le milieu de conversion comprend un matériau Ce:YAG-phosphore faiblement dopé.

**9.** Dispositif d'éclairage selon l'une des revendications précédentes, **caractérisé en ce que** le milieu de conversion comprend un matériau optocéramique faiblement dopé, constitué de Ce:YAG, avec une conductibilité thermique d'au moins 5 W / (m*K).

**10.** Dispositif d'éclairage selon l'une des revendications précédentes, **caractérisé en ce que** la source lumineuse d'excitation et le milieu de conversion sont prévus sur un dispositif de support commun et le dispositif de support, au moins dans la région du milieu de conversion, et/ou le support destiné à fixer le milieu de conversion est réalisé pour évacuer la chaleur et/ou en tant que puits thermique.

**11.** Dispositif d'éclairage selon l'une des revendications précédentes, **caractérisé en ce que** le milieu de conversion est disposé en biais, sous un angle $\alpha$, par rapport au chemin optique de la lumière d'excitation.

**12.** Dispositif d'éclairage selon au moins une des revendications précédentes, dans lequel la lumière qui, à l'état de fonctionnement, est réfléchie et/ou réémise par la source lumineuse secondaire tombe sur un réflecteur, en particulier un réflecteur parabolique.

**13.** Utilisation d'un dispositif d'éclairage selon au moins une des revendications 1 à 12, dans un projecteur ou un phare, en particulier un phare automobile ou le phare d'un aéronef ou d'un véhicule ferroviaire ou d'un navire.

**14.** Phare, en particulier un phare destiné à des véhicules automobiles, comprenant un dispositif d'éclairage selon l'une des revendications précédentes, dans lequel le milieu de conversion, en particulier le point lumineux du milieu de conversion, est placé dans le point de fonctionnement du phare.

EP 2 828 124 B1

Fig. 1

Fig. 2

EP 2 828 124 B1

Fig. 3

Fig. 4

EP 2 828 124 B1

EP 2 828 124 B1

Fig. 5

Fig. 6

Fig. 7

Fig. 8

EP 2 828 124 B1

Fig. 9

Fig. 10

Fig. 11

Fig. 12

EP 2 828 124 B1

Fig. 13

Fig. 14

Fig. 15

EP 2 828 124 B1

Fig. 16

EP 2 828 124 B1

Fig. 17

EP 2 828 124 B1

EP 2 828 124 B1

14    82    2

Fig. 18

Fig. 19

Fig. 20

Fig. 21

EP 2 828 124 B1

EP 2 828 124 B1

Fig. 22

Fig. 23

Fig. 24

EP 2 828 124 B1

14

14

14

14

Fig. 25

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008031256 A1
- US 7356054 B2
- WO 2012025141 A
- US 2011157865 A1
- DE 102010028949 A1
- US 2011222149 A1
- US 2011255264 A1
- EP 2551154 A2
- DE 102008012316 A1